# EUROPEAN PATENT SPECIFICATION

(11) **EP 2 217 665 B1**
(45) Date of publication and mention of the grant of the patent: **29.06.2011**
(21) Application number: 08849074.3
(22) Date of filing: 07.11.2008
(51) Int. Cl.: C09C 1/00

(54) **BRIGHT INTERFERENCE PIGMENTS**
HELLE INTERFERENZPIGMENTE
PIGMENTS INTERFÉRENTIELS DE COULEUR VIVE

(30) Priority: 16.11.2007 EP 07120908; 16.05.2008 EP 08156324
(43) Date of publication of application: 18.08.2010
(73) Proprietor: BASF SE, 67056 Ludwigshafen (DE)
(72) Inventor: BUJARD, Patrice, CH-1784 Courtepin (CH); BAYSANG, Marc, CH-4227 Büsserach (CH); BUGNON, Philippe, CH-1724 Le Mouret (CH)
(86) International application number: PCT/EP2008/065095
(87) International publication number: WO 2009/062886

(56) References cited:
- EP-A- 0 332 071
- EP-A- 0 982 376
- DE-A1- 19 647 539

## Description

The present invention relates to (interference) pigments comprising a plate-like substrate, a layer of SnO₂, and/or a layer of a metal oxide, which is selected from Fe₂O₃, TiO₂, ZrO₂ and/or HfO₂, said layer(s) being doped with Mo and/or W , a method of producing the (interference) pigments and their use in paints, ink-jet printing, for dyeing textiles, for pigmenting coatings, printing inks, plastics, cosmetics, glazes for ceramics and glass.

Interference pigments having a core consisting of a transparent carrier material, such as for example, natural or synthetic mica, SiO₂, or glass, are known. Reference is made, for example, to Gerhard Pfaff and Peter Reynders, Chem. Rev. 99 (1999) 1963-1981.

US6,719,838 discloses coloured interference pigments comprising platelet-shaped substrates having: (A) a coloured coating having a refractive index of n>1.8, (B) a colourless coating having a refractive index of n>1.8, (C) a colourless coating having a refractive index of n≤1.8, (D) a colourless coating having a refractive index of n>1.8, and optionally (E) an outer protective layer.
Layer (A) contains Fe₂O₃, Fe₃O₄, Ce₂O₃, Cr₂O₃, Ti sub-oxides, titanium oxynitrides, titanium nitride, molybdenum oxides, CoO, Co₃O₄, VO₂, V₂O₃, NiO, MoS₂, WS₂, V₂O₅, CuO, Cu₂O, Ag₂O, CeO₂, MnO₂, Mn₂O₃, Mn₂O₅ or mixtures thereof (mixed oxides).

DE4319669 discloses lustrous pigments comprising a lamellar substrate coated with: (a) a first layer of colourless metal oxide; (b) a second layer of MoO₂/MoO₃ and/or WO₂/WO₃ mixed oxides; and (c) optionally a third layer of colourless metal oxide.

DE19647539 relates to conductive pigments comprising flaky or acicular substrates with a conductive coating. the conductive coating is a tin or titanium dioxide (SnO₂ or TiO₂) layer doped with niobium (Nb) and/or tantalum (Ta). The amount of Nb and/or tantalum Ta in the SnO₂ or TiO₂ is 0.1-20 atom %. In Examples 1 to 3 of DE19647539 the preparation of pigments having the following structure is described: mica/SnO₂ (Nb); SiO₂ flakes/SnO₂ (Nb); mica/TiO₂ (Ta).

US4,948,631 (EP332071) discloses a process for preparing a particularly bluish pearl luster pigment by reduction of a titanium dioxide coated mica pigment with ammonia at elevated temperatures, which comprises using a mica pigment whose TiO₂ coating has an optical layer thickness of from 50 to 100 nm or from 300 to 340 nm, performing the treatment with ammonia at from 750 to 850°C, and keeping the pigment in constant agitation during the reduction.
A further intensification of the blue color by reduction is obtained by doping the TiO₂ coating with foreign ions such as oxides of hexavalent tungsten, hexavalent molybdenum and/or of tetravalent tin. These foreign ions are either incorporated in the TiO₂ coating early on, in the course of the production of the TiO₂-coated mica, or made to diffuse into the TiO₂ coating by subsequently heating the starting material in the presence of tungsten(+6), molybdenum(+6) or tin(+4) compounds.

In contrast to US4,948,631, the process of the present invention results in pigments with enhanced colour strength (chroma) without reduction of a titanium dioxide coated mica pigment with ammonia at elevated temperatures.

A popular way to enhance the color strength of metal oxide coated transparent substrates is to use a black background. The observer sees the light reflected by the pigment flakes and not the light reflected by the absorbing background. A second way to enhance the color strength of transparent effect pigments is to coat the flakes with a carbon containing layer, as described, for example, in EP0982376. The coating of the effect pigment flakes with an external carbon containing layer lead to a significant loss of the brightness of the effect pigments (no sparkling any more).

Another disadvantage in putting a carbon containing layer on the surface is its lack of adherence and many free carbon containing particles are frequently observed.

This last issue has been solved by putting the carbon inside a metal oxide layer coated on the substrate (WO08/104467). Said approach allows getting the effect of a light absorbing background while keeping the brightness of the effect pigments.

However, the presence of carbon within a metal oxide layer gives some slight additional brownish color, which may be undesired.

Accordingly, it has been the object of the present invention to enhance the colour strength (chroma) of the effect pigments while keeping the pigment brightness and avoiding the slight brownish issue.

Said object has been solved by pigments, comprising a plate-like substrate, and (a) a layer of SnO₂, and/or a layer of a metal oxide, which is selected from Fe₂O₃, TiO₂, ZrO₂ and/or HfO₂, said layer being doped with Mo and/or W

The layer of SnO₂ comprises 0.1 to 60 mole %, especially 0.1 to 30 mole % Mo and/or W, based on the moles metal in the SnO₂ layer, and the metal oxide layer of Fe₂O₃, TiO₂, ZrO₂ and/or HfO₂ comprises 0.1 to 10 mole %, especially 0.1 to 5 mole % Mo and/or W, based on the moles metal in the metal oxide.

In case of TiO₂ it was found that the doping of the metal oxide layer can result in an improved photostability and densification. The effect of photostabilisation is outstanding if the Mo is incorporated in the outermost 20 nm of a TiO₂ layer.

If the metal oxide of layer (a) is TiO₂ and only one layer (a) is present, it is preferred that an additional layer of SnO₂ is present between the plate-like substrate and the layer (a).

The thickness of layer (a) is in general in the range of 10 to 300 nm, especially 20 to 200 nm. According to the present invention optical variable effect pigments are manufactured by coating plate-like substrates, such as, for example, aluminium oxide, perlite, glass, with a layer of SnO₂, and/or a metal oxide layer selected from Fe₂O₃, TiO₂, ZrO₂ and/or HfO₂, which is,doped with an element selected from Mo and/or W. The doped metal oxide layer features the same X-ray diffraction pattern as the metal oxide layer without doping.

The doped metal oxide layer can be directly in contact with the substrate. The pigments can comprise further layers of metals and dielectric materials, especially metal oxides. The doped metal oxide layer can be the most external layer. The doping can vary gradually through the layer thickness, being zero on one side and maximum on the other side. Optionally, the pigment can have an external protective layer.

In a preferred embodiment of the present invention the doping is maximum on the side of the substrate and gradually decreases such that is it less than 1/10 of his maximum at the interface adjacent to the layer without doping. If there is only one layer, the minimum doping is on the most external side (with respect to the substrate) of the layer.

The doped layer can also comprise carbon containing particles, which can be obtained as described in WO08/104467. The metal oxide layer is preferably TiO₂ in the rutile modification and the doping elements are Mo, or W, giving for example molybdenum titanate. The at present most preferred doping agent is Mo.

The pigments of the present invention can be produced by coating plate-like substrates with at least two metal oxides in a wet process by hydrolysis of the corresponding water-soluble metal compounds, by separating, drying and optionally calcinating the pigment thus obtained, wherein the first metal oxide(s) is selected from SnO₂, Fe₂O₃, TiO₂, ZrO₂ and/or HfO₂, and the second metal oxide is selected from Mo and W .

The metal oxide layer of Fe₂O₃, TiO₂, ZrO₂ and/or HfO₂ comprises 0.1 to 10 mole %, especially 0.1 to 5 mole % Mo and/or W, based on the moles metal in the metal oxide. That is, a metal oxide layer of TiO₂ comprises 0.1 to 10 mole %, especially 0.1 to 5 mole % Mo and/or W, based on the moles Ti in the TiO₂. The layer of SnO₂ comprises 0.1 to 60 mole %, especially 0.1 to 30 mole % Mo and/or W, based on the moles metal in the SnO₂ layer.

In case of a mixture of Fe₂O₃ and TiO₂ Fe₂O₃ is usually comprised in an amount of from 0.1 to 10 mole %, especially 0.1 to 5 mole % Fe based on the moles Ti in the TiO₂, wherein the weight ratio of Fe₂O₃ to TiO₂ is preferably about 1:9.

The process of the present invention is explained on the basis of TiO₂ and Mo, but is not limited thereto.

In an especially preferred embodiment of the present invention the plate-like substrate flakes are mixed with distilled water In a closed reactor and heated at about 90 °C. The pH is set to about 1.8 to 22 and a preparation comprising TiOCl₂, HCl, MoCl₅ and distilled water is added slowly while keeping the pH constant (1.8 to 2.2) by continuous addition of 1 M NaOH, or KOH solution. By adding an amino acid, such as glycine, during the deposition of the TiO₂ it is possible to improve the quality of the TiO₂ coating to be formed. Reference is made to WO081104467.

Advantageously, a preparation comprising MoCl₅, TiOCl₂, HCl, and glycine and distilled water is added to the substrate flakes in water. The amino acid is added in an amount of 0.01 to 5 moles, especially 0.01 to 0.1 mole per mole titanium. The glycine content in the preparation may vary with time from its maximum to zero. The maximum content of glycine in the preparation can be at the starting of the deposition process or at the end. Glycine can be replaced by other amino acids, such as, for example, alanine, valine, or aspartic acid (α-, β- and γ-form). Instead of MoCl₅ sodium molybdate, ammonium molybdate, or sodium ammonium molybdate can be used. When molybdate is utilised as Mo source, its addition goes through the basic moiety used to compensate the pH (in NaOH or KOH).

By adding small amounts of SnO₂, however, it is possible to force the rutile structure to be formed. For example, as described in WO93/08237, tin dioxide can be deposited before TiO₂(Mo) precipitation. For said purpose a preparation comprising SnCl₄, HCl, and distilled water is added slowly while keeping the pH constant (1.3 to 1.7) by continuous addition of 1 M NaOH, or KOH solution. By adding an amino acid, such as glycine; during the deposition of the SnO₂ it is possible to improve the quality of the SnO₂ coating to be formed, which in turn improves the quality of the adjacent TiO₂ or TiO₂(Mo) layers.

The TiO₂ layer can comprise in addition to molybdenum (Mo) carbon, B₂O₃, Al₂O₃ and/or MgO.

In a preferred embodiment of the present invention alternating layers of SnO₂ and TiO₂(Mo) are precipitated on the (transparent) plate-like substrates.
Plate-like (transparent) substrate/[SnO₂/TiO₂(Mo)]ₙ with n = 1, 2, 3, 4, or 5, especially 2, 3, 4, or 5.

In another preferred embodiment of the present invention alternating layers of SnO₂(Mo) and TiO₂ are precipitated on the (transparent) plate-like substrates.
Plate-like (transparent) substrate/[SnO₂(Mo)/TiO₂]ₙ with n = 1, 2, 3, 4, or 5, especially 2, 3, 4, or 5.

The plate-like (transparent) substrate is preferably selected from natural mica, synthetic mica, SiO₂ flakes, Al₂O₃ flakes, and natural glass flakes, such as perlite flakes, and synthetic glass flakes.

The product coated with TiO₂(Mo) is calcined at a temperature of from 500 to 1000°C. especially 600 to 800°C, in an oxygen-containing atmosphere such as, for example, air, and/or in an oxygen-free atmosphere such as, for example, argon, nitrogen and/or helium or under a vacuum of less than 13 Pa (10⁻¹ Torr), wherein the presence, or exclusion of oxygen can lead to different products.

The pigments obtained by the process of the present invention have very bright color and show color flop.

The pigment of the present invention comprises, a platelet-like substrate, and (a) a layer of SnO₂, and/or a layer of a metal oxide, which is selected from Fe₂O₃, TiO₂, ZrO₂ and/or HfO₂, said layer being doped with Mo and/or W.

Preferably, the metal oxide layer comprises less than 10 mole %, especially less than 5 mole % Mo and/or W, based on the moles metal in the metal oxide.

The preferred metal oxide is TiO₂. The preferred doping agent is Mo.

Besides the doping agent the metal oxide can comprise further metal oxides. If the metal oxide is TiO₂, the metal oxide layer can comprise in addition, for example, B₂O₃, Al₂O₃ and/or MgO. If Fe₂O₃ is present, the ratio of Fe₂O₃ to TiO₂ is preferably about 1:9.

In a preferred embodiment, the pigment comprises, a platelet-like substrate, and (a) a layer of TiO₂, said layer being doped with Mo (TiO₂(Mo).

Besides layer (a) the pigments of the present invention can comprise further layers of metals and dielectric materials, especially metal oxides of low and high refractive index.

Suitable metals for the semi-transparent metal layer are, for example, Cr, Ti, Mo, W, Al, Cu, Ag, Au, or Ni. The semi-transparent metal layer has typically a thickness of between 5 and 25 nm, especially between 5 and 15 nm.

The metal layer can be obtained by wet chemical coating or by chemical vapor deposition, for example, gas phase deposition of metal carbonyls. The substrate is suspended in an aqueous and/or organic solvent containing medium in the presence of a metal compound and is deposited onto the substrate by addition of a reducing agent. The metal compound is, for example, silver nitrate or nickel acetyl acetonate (WO03/37993).

According to US-B-3,536,520 nickel chloride can be used as metal compound and hypophosphite can be used as reducing agent. According to EP-A-353544 the following compounds can be used as reducing agents for the wet chemical coating: aldehydes (formaldehyde, acetaldehyde, benzalaldehyde), ketones (acetone), carbonic acids and salts thereof (tartaric acid, ascorbinic acid), reductones (isoascorbinic acid, triosereductone, reductine acid), and reducing sugars (glucose). However, it is also possible to use reducing alcohols (allyl alcohol), polyols and polyphenols, sulfites, hydrogensulfites, dithionites, hypophosphites, hydrazine, boron nitrogen compounds, metal hydrides and complex hydrides of aluminium and boron. The deposition of the metal layer can furthermore be carried out with the aid of a CVD method. Methods of this type are known. Fluidised-bed reactors are preferably employed for this purpose. EP-A-0741170 describes the deposition of aluminium layers by reduction of alkylaluminium compounds using hydrocarbons in a stream of inert gas. The metal layers can furthermore be deposited by gas-phase decomposition of the corresponding metal carbonyls in a heatable fluidised-bed reactor, as described in EP-A-045851. Further details on this method are given in WO93/12182. A further process for the deposition of thin metal layers, which can be used in the present case for the application of the metal layer to the substrate, is the known method for vapour deposition of metals in a high vacuum. It is described in detail in Vakuum-Beschichtung [Vacuum Coating], Volumes 1-5; Editors Frey, Kienel and Löbl, VDI-Verlag, 1995. In the sputtering process, a gas discharge (plasma) is ignited between the support and the coating material, which is in the form of plates (target). The coating material is bombarded with high-energy ions from the plasma, for example argon ions, and thus removed or atomised. The atoms or molecules of the atomised coating material are precipitated on the support and form the desired thin layer. The sputtering process is described in Vakuum-Beschichtung [Vacuum Coating], Volumes 1-5; Editors Frey, Kienel and Löbl, VDI-Verlag, 1995. For use in outdoor applications, in particular in the application in vehicle paints, the pigments can be provided with an additional weather-stabilising protective layer, the so-called post-coating, which simultaneously effects optimum adaptation to the binder system. Post-coatings of this type have been described, for example, in EP-A-0268918 and EP-A-0632109.

In a further preferred embodiment, the pigment comprises, a platelet-like substrate, and (a) a layer structure: TiO₂(Mo)TiO₂, or TiO₂/TiO₂(Mo)/TiO₂, or TiO₂(Mo)/a layer of a metal oxide of low refractive index, especially SiO₂, Al₂O₃, AIOOH, B₂O₃, or a mixture thereof, wherein alkali or earth alkali metal oxides can be contained as additional component/a layer of a metal oxide of high refractive index, especially TiO₂, ZrO₂, Fe₂O₃, Fe₃O₄, Cr₂O₃, ZnO or a mixture of these oxides; or TiO₂(Mo)/a layer of a metal oxide of low refractive index, especially SiO₂, Al₂O₃, AIOOH, B₂O₃, or a mixture thereof, wherein alkali or earth alkali metal oxides can be contained as additional component/TiO₂(Mo).

Suitable platelet-shaped substrates are transparent, partially reflectant, or reflectant. Examples thereof are natural micaceous iron oxide (for example as in WO99/48634), synthetic and doped micaceous iron oxide (for example as in EP-A-068311), mica (biotite, vermiculite, sericite, muscovite, phlogopite, fluorophlogopite, kaolinite or related), or any synthetic mica, such as synthetic fluorophlogopite, basic lead carbonate, flaky barium sulfate, MoS₂, SiO₂, Al₂O₃, TiO₂, glass, ZnO, ZrO₂, SnO₂, BiOCl, chromium oxide, BN, MgO flakes, Si₃N₄, and graphite. Particularly preferred substrates are mica, synthetic mica, SiO₂ flakes, Al₂O₃ flakes, TiO₂ flakes, and glass flakes.

Another preferred embodiment is the use of flat metallic particles as the core. Examples of suitable metallic particles are flakes of Ag, Al, Au, Cu, Cr, Fe, Ge, Mo, Ni, Si, Ti, or alloys thereof, such as brass or steel, preferably Al flakes. Depending on the material, a natural optically non-interfering oxide layer may form on the surface of metallic particle. Partially reflecting cores have preferably a reflectance of at least 35% of the light falling vertically on its surface in the range from 380 to 800 nm.

In said embodiment pigments having a structure shown below are preferred: Al/SiO₂/TiO₂(Mo) and Al/SiO₂/Fe₂O₃(Mo). The thickness of the SiO₂ layer is in the range of from 10 to 800 nm, preferably from 50 to 600 nm; the thickness of the TiO₂(Mo) and Fe₂O₃(Mo) layer is in the range of from 1 to 500 nm, preferably from 10 to 150 nm.

Additional examples of plateletlike substrates are plateletlike organic pigments, such as quinacridones, phthalocyanine, fluororubine, red perylenes or diketopyrrolopyrroles. According to the present invention the term "aluminum" comprises aluminum and alloys of aluminum. Alloys of aluminum are, for example described in G. Wassermann in Ullmanns Enzyklopädie der Industriellen Chemie, 4. Auflage, Verlag Chemie, Weinheim, Band 7, S. 281 to 292. Especially suitable are the corrosion stable aluminum alloys described on page 10 to 12 of WO00/12634, which comprise besides of aluminum silicon, magnesium, manganese, copper, zinc, nickel, vanadium, lead, antimony, tin, cadmium, bismuth, titanium, chromium and/or iron in amounts of less than 20 % by weight, preferably less than 10 % by weight.

In one preferred embodiment of the present invention, the interference pigments comprise materials having a "high" index of refraction, which is defined herein as an index of refraction of greater than about 1.65, and optionally materials having a "low" index of refraction, which is defined herein as an index of refraction of about 1.65 or less. Various (dielectric) materials that can be utilized including inorganic materials such as metal oxides, metal suboxides, metal fluorides, metal oxyhalides, metal sulfides, metal chalcogenides, metal nitrides, metal oxynitrides, metal carbides, combinations thereof, and the like, as well as organic dielectric materials. These materials are readily available and easily applied by physical, or chemical vapor deposition processes, or by wet chemical coating processes.

A dielectric material having a "high" refractive index is a material having a refractive index greater than about 1.65, preferably greater than about 2.0, most preferred greater than about 2.2. Examples of such a dielectric material are zinc sulfide (ZnS), zinc oxide (ZnO), zirconium oxide (ZrO₂), titanium dioxide (TiO₂), carbon, indium oxide (In₂O₃), indium tin oxide (ITO), tantalum pentoxide (Ta₂O₅), chromium oxide (Cr₂O₃), cerium oxide (CeO₂), yttrium oxide (Y₂O₃), europium oxide (Eu₂O₃), iron oxides such as iron(II)/iron(III) oxide (Fe₃O₄) and iron(III) oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon monoxides (SiO), selenium trioxide (Se₂O₃), tin oxide (SnO₂), tungsten trioxide (WO₃), or combinations thereof. The dielectric material is preferably a metal oxide. It being possible for the metal oxide to be a single oxide or a mixture of oxides, with or without absorbing properties, for example, TiO₂, ZrO₂, Fe₂O₃, Fe₃O₄, Cr₂O₃ or ZnO, with TiO₂ being especially preferred.

Nonlimiting examples of suitable low index dielectric materials that can be used include silicon dioxide (SiO₂), aluminum oxide (Al₂O₃), and metal fluorides such as magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF₃), samarium fluoride (SmF₃), barium fluoride (BaF₂), calcium fluoride (CaF₂), lithium fluoride (LiF), combinations thereof, or any other low index material having an index of refraction of about 1.65 or less. For example, organic monomers and polymers can be utilized as low index material, including dienes or alkenes such as acrylates (e.g., methacrylate), polymers of perfluoroalkenes, polytetrafluoroethylene (TEFLON), polymers of fluorinated ethylene propylene (FEP), parylene, p-xylene, combinations thereof, and the like. Additionally, the foregoing materials include evaporated, condensed and cross-linked transparent acrylate layers, which may be deposited by methods described in US-B-5,877.895 .

Furthermore, TiO₂(Mo) coated substrate flakes may, as described in EP-A-0 982 376, be coated with a nitrogen-doped carbon layer The process described in EP-A-0 982 376 comprises the following steps:
(a) suspending the TiO₂(Mo) coated substrate flakes in a liquid,
(b) where appropriate adding a surface-modifier and/or a polymerization catalyst,
(c) before or after step (b), adding one or more polymers comprising nitrogen and carbon atoms, or one or more monomers capable of forming such polymers,
(d) forming a polymeric coating on the surface of the flakes,
(e) isolating the coated flakes and
(f) heating the coated flakes to a temperature of from 100 to 600°C in a gaseous atmosphere.

The polymer may be a polypyrrole, a polyamide, a polyaniline, a polyurethane, a nitrile rubber or a melamine-formaldehyde resin, preferably a polyacrylonitrile, or the monomer is a pyrrole derivative, an acrylonitrile, a methacrylonitrile, a crotonitrile, an acrylamide, a methacrylamide or a crotonamide, preferably an acrylonitrile, methacrylonitrile or crotonitrile, most preferably an acrylonitrile.

Preferably, the flakes are heated in step (f) initially to from 100°C to 300°C in an oxygen-containing atmosphere and then to from 200 to 600°C in an inert gas atmosphere.

The present invention therefore relates also to pigments comprising a transparent plate-like substrate,
(a) a layer of SnO₂, and/or a layer of a metal oxide, which is selected from Fe₂O₃, TiO₂, ZrO₂ and/or HfO₂, said layer being doped with Mo and/or W; and
(b) over the entire surface of layer (a) a layer consisting of from 50 to 95 % by weight carbon, from 5 to 25 % by weight nitrogen and from 0 to 25 % by weight of the elements hydrogen, oxygen and/or sulfur, the percentage by weight data relating to the total weight of the layer (b) (PAN).

The thickness of the nitrogen-doped carbon layer is generally from 10 to 150 nm, preferably from 30 to 70 nm. In said embodiment preferred pigments have the following layer structure: transparent plate-like substrate/TiO₂/PAN, transparent plate-like substrate/TiO₂/PAN/TiO₂, transparent plate-like substrate/TiO₂/PAN/SiO₂/PAN.

It is possible to obtain pigments that are more intense in colour and more transparent by applying, on top of layer (a), a metal oxide of low refractive index, such as SiO₂, Al₂O₃, AIOOH, B₂O₃ or a mixture thereof, preferably SiO₂, and optionally applying a further TiO₂ layer on top of the later layer (EP-A-892832, EP-A-753545, WO93/08237, WO98/53011, WO9812266, WO9838254, WO99/20695, WO00142111, and EP-A-1213330).

Accordingly, preferred interference pigments comprise besides layer (a) in addition (b) a metal oxide of low refractive index, wherein the difference of the refractive indices is at least 0.1. In addition, interference pigments are preferred comprising alternating layers of metal oxides of high and low refractive index, wherein at least one of the high refractive layers is a layer (a).

The thickness of the layer of the metal oxide of high refractive index is in general in the range of 10 to 300 nm, especially 20 to 200 nm. The thickness of the layer of the metal oxide of low refractive index is in general in the range of 1 to 600 nm, especially 1 to 400 nm.

Preferred are platelet-like particles on basis of a transparent, or semitransparent substrate having a low index of refraction, especially natural, or synthetic mica, another layered silicate, glass, Al₂O₃, SiO₂, especially SiO₂, SiO₂/SiOₓ/SiO₂(0.03 ≤ x ≤ 0.95), SiO_{1.40}-_{2.0}/SiO_{0.07-0.099}/SiO_{1.40-2.0}, or Si/SiO_{z} with 0.70 ≤ z ≤ 2.0, especially 1.40 ≤ z ≤ 2.0, having on top of the substrate a layer (a).

Pigments having the following layer structure are especially preferred:

| | | | |
|---|---|---|---|
| TRASUB | TiO₂(Mo) | | |
| TRASUB | Fe₂O₃(Mo) | | |
| TRASUB | TiO₂(Mo) | SiO₂ | TiO₂ |
| TRASUB | TiO₂ | SiO₂ | TiO₂(Mo) |
| TRASUB | TiO₂(Mo) | SiO₂ | TiO₂(Mo) |
| TRASUB | TiO₂(Mo) | SiO₂ | TiO₂/Fe₂O₃ |
| TRASUB | (Sn,Sb)O₂ | SiO₂ | TiO₂(Mo) |
| TRASUB | TiO₂/Fe₂O₃ | SiO₂ | TiO₂(Mo) |
| TRASUB | Cr₂O₃ | SiO₂ | TiO₂(Mo) |
| TRASUB | Fe₂O₃ | SiO₂ | TiO₂(Mo) |
| TRASUB | TiO₂(Mo) | SiO₂ | Fe₂O₃ |
| TRASUB | TiO suboxides | SiO₂ | TiO₂(Mo) |
| TRASUB | TiO₂(Mo) | SiO₂ | TiO suboxides |
| TRASUB | TiO₂(Mo) | SiO₂ | TiO₂ + SiO₂ + TiO₂ |
| TRASUB | TiO₂ + SiO₂ + TiO₂ | SiO₂ | TiO₂(Mo) |
| TRASUB | TiO₂(Mo) | Al₂O₃ | TiO₂ |
| TRASUB | TiO₂ | Al₂O₃ | TiO₂(Mo) |
| TRASUB | Fe₂TiO₅ | SiO₂ | TiO₂(Mo) |
| TRASUB | TiO₂(Mo) | SiO₂ | Fe₂TiO₅/ TiO₂ |
| TRASUB | STL | TiO₂(Mo) | |
| TRASUB | STL | TiO₂(Mo) | TiO₂ |
| TRASUB | STL | SiO₂ | TiO₂(Mo) |

wherein TRASUB is a transparent, or semitransparent substrate having a low index of refraction, especially natural, or synthetic mica, another layered silicate, glass, Al₂O₃, SiO₂, especially SiO₂, SiO₂/SiOₓ/SiO₂ (0.03 ≤ x ≤ 0.95), SiO_{1.40-2.0}/SiO_{0.70-0.99}/SiO_{1.40-2.0}, or Si/SiO_{z} with 0.70 ≤ z ≤ 2.0, especially 1.40 ≤ z ≤ 2.0, and STL is a semi-transparent layer, such as, for example, a semi-transparent metal layer of Cu, Ag, Cr, or Sn, or a semitransparent carbon layer, wherein tin dioxide can be deposited before titanium dioxide and/or TiO₂(Mo) precipitation. A SnO₂ layer adjacent to a TiO₂ layer having a thickness of more than 30 nm TiO₂ is advantageous to get the rutile modification.

The plate-like substrate is preferably selected from natural mica, synthetic mica, SiO₂ flakes, Al₂O₃ flakes, and natural glass flakes, such as perlite flakes, and synthetic glass flakes.

In a preferred embodiment of the present invention the plate-like substrate is synthetic mica. It is preferred that the synthetic mica be fluorophlogopite. The fluorophlogopite can be obtained commercially from Shantou F. T. Z. Sanbao Pearl Luster Mica Tech Co., Ltd., (Guangdong, China). The fluorophlogopite, KMg₃AlSi₃O₁₀F₂, is exfoilated using a wet method process. The Sanbao fluorophlogopite has an average thickness of 0.4 to 1.3 microns as determined by SEM measurement. Such wet process is described in Chinese patent publication CN1693200A. Chinese patent publication CN1693199A, is a related patent disclosing a method for precisely classifying mica powder synthesized by a wet method. Both patents are assigned to Sanbaoguangjing Mica Sci. & Tec. and are incorporated herein by reference. The wet process refers to a production method that uses water as the medium in a number of steps. First, the mica powder is passed through a high pressure water pump to carry out hydraulic breaking, then a centrifuge for dewatering, followed by a roller mill for grinding and pulping. After the mica passes through the roller mill, the mica is fed into a classifying pool and finally into a drying stove or oven to be baked until moisture content of the mica is less than 1 %. The fluorophlogopite produced possesses positive characteristics of synthetic mica such as brightness, non-corrodibility and the absence of deleterious substances, e.g. Hg, Pb, As, etc. Other distinct quality characteristics include high purity, especially low Fe content (<0.2%).

Pigments having a sparkling silver pearl colour on a black background can be obtained by coating the synthetic mica flakes with TiO₂&Fe₂O₃(Mo). Optionally, SnO₂ can be present between the substrate and the TiO₂&Fe₂O₃(Mo)-layer.

Particles of synthetic mica (fluorophlogopite), natural mica, perlite etc. coated with a Mo doped TiO₂ layer corresponding to a violet color features an interesting high reflectivity in the infrared range. Such particles may have, for example, the following layer structure: TRASUB/SnO₂/TiO₂/SnO₂(Mo)/TiO₂, wherein the total thickness of the TiO₂ layers is within the range of 90 to 130 nm.

The pigment is obtained by mixing the synthetic mica flakes with distilled water in a closed reactor and heating at about 90 °C, setting the pH to about 1.8 to 2.2 and a preparation comprising TiOCl₂, HCl, MoCl₅, FeCl₃ and distilled water is added slowly while keeping the pH constant (1.8 to 2.2) by continuous addition of 1M NaOH, or KOH solution. The coated synthetic mica flakes are filtered and dried.

The product coated with TiO₂&Fe₂O₃(Mo) is first calcined at a temperature of from 500 to 1000°C, especially 600 to 850°C, in an oxygen-free atmosphere such as, for example, argon, nitrogen and/or helium or under a vacuum of less than 13 Pa (10⁻¹ Torr), and then at a temperature of from 500 to 1000°C, especially 600 to 850°C, in an oxygen-containing atmosphere such as, for example, dry air.

The weight ratio of Fe₂O₃ to TiO₂ is 1:1 to 1:10, preferably about 1:9.

Mo is comprised in an amount of 0.1 to 10 mole %, especially 0.1 to 5 mole %, based on the moles Ti in the TiO₂.

The thickness of the TiO₂/Fe₂O₃(Mo) is in general in the range of 10 to 300 nm, especially 20 to 200 nm.

In another preferred embodiment of the present invention glass flakes can be used as the plate-like substrate. Reference is made to WO07/054379.

The glass flakes are prepared, for example, by a process described in W02004056716. By said process flakes may be produced with average thicknesses below 250 nm and with thickness variations as low as 10 percent.

The modification of the glass composition is possible in order to adjust the index of refraction between 1.45 and 1.65. Examples of suitable glass materials are C glass [SiO₂ (65-70 %), Al₂O₃ (2-6 %), CaO (4-9 %), MgO (0-5 %), B₂O₃ (2-7 %), Na₂O & K₂O (9-13 %), ZnO (1-6 %)] and ECR glass [SiO₂ (63-70 %), Al₂O₃ (3-6 %), CaO (4-7 %), MgO (1-4%), B₂O₃ (2-5 %), Na₂O (9-12 %), K₂O (0-3 %), TiO₂ (0-4 %), ZnO (1-5%)]. An especially preferred glass material is ECR glass having > 0.1 % TiO₂, especially below 1 % TiO₂. The softening temperature according to ASTM C-338 of the ECR glass is below 800°C, especially below 700°C. According to ASTM C-338 the softening point temperature is the temperature at which a uniform fiber of glass (0.65 mm in diameter by 23.5 cm long) elongates under its own weight at a rate of 1.0 millimeters per minute when the upper 10 cm of its length is heated in a special furnace at the rate of 5°C per minute.

Such ECR glass flakes are, for example, available from GlassFlake Ltd.:
GF10 has an average thickness of about 210 nm and a BET of 2.2 m²/g.
GF350 has an average thickness of about 390 nm and a BET of 1.2 m²/g.
Both products are based on ECR glass, which has a softening temperature according to ASTM C 338 of about 688°C.

In another preferred embodiment the pigments according to the invention are based on synthetic SiO₂ flakes which have a uniform layer thickness and are preferably prepared in accordance with WO93/08237 by solidification and hydrolysis of a water-glass solution on a continuous belt. The term uniform layer thickness here is taken to mean a layer-thickness tolerance of less than about 10%, e.g., from 3 to 10%, preferably from 3 to 5%, of the total dry layer thickness of the particles. The flake-form silicon dioxide particles are generally in amorphous form. Synthetic flakes of this type have the advantage over natural materials, such as, for example, mica, that the layer thickness can be adjusted with respect to the desired effects and the layer-thickness tolerance is limited. The diameter of the SiO₂ flakes is usually between 1 and 250 µm, preferably between 2 and 100 µm. Their thickness is between 200 nm and 2 µm. WO03/068868 and WO04/035693 describe the production of SiO₂ (0.70 ≤ z ≤ 2.0) flakes by physical vapor deposition. The SiO₂ flakes have a high plane-parallelism and a defined thickness in the range of ± 10%, especially ± 5 % of the average thickness. The SiO_{y} flakes have a thickness of from 20 to 2000 nm, especially from 20 to 500 nm, most preferred 50 to 350 nm the diameter of the flakes be in a preferred range of about 1-60 µm with a more preferred range of about 5-40 µm.

In another preferred embodiment the pigments according to the invention are based on Al₂O₃ substrates. Preference is given to the Al₂O₃ substrates whose structure and production are described in EP0763573. These comprise between 0.1 and 4% by weight of titanium oxide and preferably have a mean particle diameter of 5-60 µm, a thickness of less than 1 µm and a form factor of greater than 20. However, particular preference is given to the substrates described in Eur.Coat.J., 04/99, pp.90-96. Al₂O₃ substrate particles of this type, which are also known as alumina flakes, are synthesised from the salt melt by a crystal-growth process. The platelet-shaped particles formed in this way have an extraordinarily smooth surface and have very regular crystal shapes. The mean diameter of the substrate particles is not crucial per se. It is usually in the range from 1 to 250 µm, preferably from 2 to 200 µm and in particular from 5 to 60 µm. The form factor of the substrate particles is greater than 20, but preferably between 50 and 200.

In another preferred embodiment the pigments according to the invention are based on perlite flakes. Reference is made to PCT/EP2008/058160. Perlite is a hydrated natural glass containing typically about 72-75% SiO₂, 12-14% Al₂O₃, 0.5-2% Fe₂O₃, 3-5 % Na₂O, 4-5% K₂O, 0.4-1.5% CaO (by weight), and small concentrations of other metallic elements. Perlite is distinguished from other natural glasses by a higher content (2-10% by weight) of chemically bonded water, the presence of a vitreous, pearly luster, and characteristic concentric or arcuate onion skin-like (i.e., perlitic) fractures. Perlite flakes may be prepared by methods disclosed in WO02/11882 which may include milling, screening, and thermal expansion. Perlite flakes with controlled particle size distribution, low floater content, and high blue light brightness are preferred.
Perlite flakes having a median particle size of less than 50 microns are preferred. Perlite flakes having a median particle size of from 15-50 microns are preferred and perlite flakes having a median particle size of from 20-40 microns are most preferred.
The perlite flakes have a floater content of less than 10 percent by volume; especially a floater content of less than 5 percent by volume; very especially a floater content of less than 2 percent by volume. The perlite flakes have a blue light brightness greater than 80; especially greater than 82; very especially greater than 85. The perlite flakes have an average thickness of < 2 µm, especially of from 200 to 1000 nm, especially from 200 to 600 nm. It is presently preferred that the diameter (median particle size (d₅₀)) of the flakes be in a preferred range of about 15-50 µm with a more preferred range of about 20-40 µm.

The Fe₂O₃ content of the perlite is preferably below 2 %, especially 0 %.

The at present most preferred perlite is Optimal^{™} 2550 (World Minerals). Perlites, like Optimal^{™} 1735 (World Minerals) could also be used, if particles having a particle size below 10 µm are removed, for example, by sedimentation, or centrifugation.

The metal oxide layers can be applied by CVD (chemical vapour deposition) or by wet chemical coating. The metal oxide layers can be obtained by decomposition of metal carbonyls in the presence of water vapour (relatively low molecular weight metal oxides such as magnetite) or in the presence of oxygen and, where appropriate, water vapour (e.g. nickel oxide and cobalt oxide). The metal oxide layers are especially applied by means of oxidative gaseous phase decomposition of metal carbonyls (e.g. iron pentacarbonyl, chromium hexacarbonyl; EP-A-45 851), by means of hydrolytic gaseous phase decomposition of metal alcoholates (e.g. titanium and zirconium tetra-n- and -iso-propanolate; DE-A-41 40 900) or of metal halides (e.g. titanium tetrachloride; EP-A-338 428), by means of oxidative decomposition of organyl tin compounds (especially alkyl tin compounds such as tetrabutyltin and tetramethyltin; DE-A-44 03 678) or by means of the gaseous phase hydrolysis of organyl silicon compounds (especially di-tert-butoxyacetoxysilane) described in EP-A-668 329, it being possible for the coating operation to be carried out in a fluidised-bed reactor (EP-A-045 851 and EP-A-106 235). Al₂O₃ layers (B) can advantageously be obtained by controlled oxidation during the cooling of aluminium-coated pigments, which is otherwise carried out under inert gas (DE-A-195 16181).

Phosphate-, chromate- and/or vanadate-containing and also phosphate- and SiO₂-containing metal oxide layers can be applied in accordance with the passivation methods described in DE-A-42 36 332 and in EP-A-678 561 by means of hydrolytic or oxidative gaseous phase decomposition of oxide-halides of the metals (e.g. CrO₂Cl₂, VOCl₃), especially of phosphorus oxyhalides (e.g. POCl₃), phosphoric and phosphorous acid esters (e.g. di- and tri-methyl and di- and tri-ethyl phosphite) and of amino-group-containing organyl silicon compounds (e.g. 3-aminopropyl-triethoxy- and -trimethoxy-silane).

Layers of oxides of the metals zirconium, titanium, iron and zinc, oxide hydrates of those metals, iron titanates, titanium suboxides or mixtures thereof are preferably applied by precipitation by a wet chemical method. In the case of the wet chemical coating, the wet chemical coating methods developed for the production of pearlescent pigments may be used; these are described, for example, in DE-A-14 67 468, DE-A-19 59 988, DE-A-20 09 566, DE-A-22 14 545, DE-A-22 15 191, DE-A-22 44 298, DE-A-23 13 331, DE-A-25 22 572, DE-A-31 37 808, DE-A-31 37 809, DE-A-31 51 343, DE-A-31 51 354, DE-A-31 51 355, DE-A-32 11 602 and DE-A-32 35 017, DE 195 99 88, WO 93/08237, WO 98/53001 and W003/6558.

The metal oxide of high refractive index is preferably TiO₂ and/or iron oxide, and the metal oxide of low refractive index is preferably SiO₂. Layers of TiO₂ can be in the rutile or anatase modification, wherein the rutile modification is preferred.

For the purpose of coating, the substrate particles are suspended in water and one or more hydrolysable metal salts are added at a pH suitable for the hydrolysis, which is so selected that the metal oxides or metal oxide hydrates are precipitated directly onto the particles without subsidiary precipitation occurring. The pH is usually kept constant by simultaneously metering in a base. The pigments are then separated off, washed, dried and, where appropriate, calcinated, it being possible to optimise the calcinating temperature with respect to the coating in question. If desired, after individual coatings have been applied, the pigments can be separated off, dried and, where appropriate, calcinated, and then again re-suspended for the purpose of precipitating further layers.

The metal oxide layers are also obtainable, for example, in analogy to a method described in DE-A-195 01 307, by producing the metal oxide layer by controlled hydrolysis of one or more metal acid esters, where appropriate in the presence of an organic solvent and a basic catalyst, by means of a sol-gel process. Suitable basic catalysts are, for example, amines, such as triethylamine, ethylenediamine, tributylamine, dimethylethanolamine and methoxypropylamine. The organic solvent is a water-miscible organic solvent such as a C₁₋₄alcohol, especially isopropanol.

Suitable metal acid esters are selected from alkyl and aryl alcoholates, carboxylates, and carboxyl-radical- or alkyl-radical- or aryl-radical-substituted alkyl alcoholates or carboxylates of vanadium, titanium, zirconium, silicon, aluminium and boron. The use of triisopropyl aluminate, tetraisopropyl titanate, tetraisopropyl zirconate, tetraethyl orthosilicate and triethyl borate is preferred. In addition, acetylacetonates and acetoacetylacetonates of the aforementioned metals may be used. Preferred examples of that type of metal acid ester are zirconium acetylacetonate, aluminium acetylacetonate, titanium acetylacetonate and diisobutyloleyl acetoacetylaluminate or diisopropyloleyl acetoacetylacetonate and mixtures of metal acid esters, for example Dynasil® (Hüls), a mixed aluminium/silicon metal acid ester.

As a metal oxide having a high refractive index, titanium dioxide is preferably used, the method described in US-B-3,553,001 being used, in accordance with an embodiment of the present invention, for application of the titanium dioxide layers.

An aqueous titanium salt solution is slowly added to a suspension of the material being coated, which suspension has been heated to about 50-100°C, especially 70-80°C, and a substantially constant pH value of about from 0.5 to 5, especially about from 1.2 to 2.5, is maintained by simultaneously metering in a base such as, for example, aqueous ammonia solution or aqueous alkali metal hydroxide solution. As soon as the desired layer thickness of precipitated TiO₂ has been achieved, the addition of titanium salt solution and base is stopped. Addition of a precursor for Al₂O₃ or MgO in the starting solutions is a way for improving the morphology of the TiO₂ layer.

This method, also referred to as the "titration method", is distinguished by the fact that an excess of titanium salt is avoided. That is achieved by feeding in for hydrolysis, per unit time, only that amount which is necessary for even coating with the hydrated TiO₂ and which can be taken up per unit time by the available surface of the particles being coated. In principle, the anatase form of TiO₂ forms on the surface of the starting pigment. By adding small amounts of SnO₂, however, it is possible to force the rutile structure to be formed. For example, as described in WO 93/08237, tin dioxide can be deposited before titanium dioxide precipitation and the product coated with titanium dioxide can be calcined at from 800 to 900°C.

Where appropriate, an SiO₂ (protective) layer can be applied on top of the titanium dioxide layer, for which the following method may be used: A soda waterglass solution is metered into a suspension of the material being coated, which suspension has been heated to about 50-100°C, especially 70-80°C. The pH is maintained at from 4 to 10, preferably from 6.5 to 8.5, by simultaneously adding 10 % hydrochloric acid. After addition of the waterglass solution, stirring is carried out for 30 minutes.

It is possible to obtain pigments that are more intense in colour and more transparent by applying, on top of the TiO₂ layer, a metal oxide of "low" refractive index, that is to say a refractive index smaller than about 1.65, such as SiO₂, Al₂O₃, AlOOH, B₂O₃ or a mixture thereof, preferably SiO₂, and applying a further Fe₂O₃ and/or TiO₂ layer on top of the latter layer. Such multi-coated interference pigments comprising a transparent, or semitransparent substrate and alternating metal oxide layers of with high and low refractive index can be prepared in analogy to the processes described in WO98/53011 and WO99/20695.

It is, in addition, possible to modify the powder colour of the pigment by applying further layers such as, for example, coloured metal oxides or Berlin Blue, compounds of transition metals, e.g. Fe, Cu, Ni, Co, Cr, or organic compounds such as dyes or colour lakes.

In addition, the pigment according to the invention can also be coated with poorly soluble, firmly adhering, inorganic or organic colourants. Preference is given to the use of colour lakes and, especially, aluminium colour lakes. For that purpose an aluminium hydroxide layer is precipitated, which is, in a second step, laked by using a colour lake (DE-A-24 29 762 and DE-A-29 28 287).

Furthermore, the pigment according to the invention may also have an additional coating with complex salt pigments, especially cyanoferrate complexes (EP-A-141 173 and DE-A-23 13 332).

To enhance the weather and light stability the multilayer flakes can be, depending on the field of application, subjected to a surface treatment. Useful surface treatments are, for example, described in DE-A-2215191, DE-A-3151354, DE-A-3235017, DE-A-3334598, DE-A-4030727, EP-A-649886, WO97/29059, WO99/57204, US-A-5,759,255, WO08/068152 and European patent application no. 08155993.2. Said surface treatment might also facilitate the handling of the pigment, especially its incorporation into various application media.

In a preferred embodiment the present invention is directed to pigments which comprise a mixed layer of Al₂O₃&TiO₂(Mo). The mixed layer can contain up to 20 mol % Al₂O₃. The mixed layer of Al₂O₃&TiO₂(Mo) is obtained by slowly adding an aqueous aluminum, molybdenum salt and titanium salt solution to a suspension of the material being coated, which suspension has been heated to about 50-100°C, especially 70-80°C, and maintaining a substantially constant pH value of about from 0.5 to 5, especially about from 1.2 to 2.5, by simultaneously metering in a base such as, for example, aqueous ammonia solution or aqueous alkali metal hydroxide solution. As soon as the desired layer thickness of precipitated Al₂O₃&TiO₂(Mo) has been achieved, the addition of titanium and aluminum salt solution and base is stopped.

The thickness of the mixed layer of Al₂O₃&TiO₂(Mo) is in general in the range of 20 to 200 nm, especially 50 to 150 nm. Preferably the pigments comprise a TiO₂ layer on top of the mixed layer of Al₂O₃&TiO₂(Mo) having a thickness of 1 to 50 nm, especially 10 to 20 nm. By varying the thickness of the mixed layer of Al₂O₃&TiO₂(Mo) the flop of the pigments can be enhanced and controlled as desired.

In another preferred embodiment the present invention is directed to pigments which contain a core of a transparent plate-like substrate and consist of subsequent layers of SnO₂ and TiO₂(Mo):
TRASUB/TiO₂(Mo)/SnO₂/TiO₂(Mo);
TRASUB/TiO₂(Mo)/SnO₂/TiO₂(Mo)/SnO₂/TiO₂(Mo),
TRASU B/TiO₂(Mo)/SnO₂/TiO₂(Mo)/SnO₂/TiO₂(Mo)/SnO₂/TiO₂(Mo),
TRASUB/SnO₂/TiO₂(Mo);
TRASUB/SnO₂/TiO₂(Mo)/SnO₂/TiO₂(Mo);
TRASUB/SnO₂/TiO₂(Mo)/SnO₂/TiO₂(Mo)/SnO₂/TiO₂(Mo);
TRASUB/SnO₂/TiO₂(Mo)/SnO₂/TiO₂(Mo)/SnO₂/TiO₂(Mo)/ SnO₂/TiO₂(Mo);
TRASUB/SnO₂/TiO₂(Mo)/SnO₂/TiO₂(Mo)/SnO₂/TiO₂(Mo)/ SnO₂/TiO₂(Mo)/SnO₂/TiO₂(Mo),
wherein TRASUB is a transparent, or semitransparent substrate having a low index of refraction, especially natural, or synthetic mica, another layered silicate, glass, Al₂O₃, SiO_{z}, especially SiO₂, SiO₂/SiOₓ/SiO₂ (0.03 ≤ x ≤ 0.95), SiO_{1.40-2}.₀/SiO_{0.70-0.99}/SiO_{1.40-2.0}, or Si/SiO_{z} with 0.70 ≤ z ≤ 2.0, especially 1.40 ≤ z ≤ 2.0,

In another preferred embodiment the present invention is directed to pigments having the following layer structure:
TRASU B/Fe₂O₃(Mo)
TRASU B/TiO₂&Fe₂O₃(Mo)
TRASU B/SnO₂/TiO₂&Fe₂O₃(Mo)
TRASU B/SnO₂/TiO₂&Fe₂O₃(Mo)/SnO₂/TiO₂&Fe₂O₃(Mo);
TRASU B/SnO₂/TiO₂&Fe₂O₃(Mo)/SnO₂/TiO₂&Fe₂O₃(Mo)/SnO₂/TiO₂&Fe₂O₃(Mo);
TRASU B/SnO₂/TiO₂&Fe₂O₃(Mo)/SnO₂/TiO₂&Fe₂O₃(Mo)/SnO₂/TiO₂&Fe₂O₃(Mo)/SnO₂/TiO₂&F e₂O₃(Mo);
TRASU B/SnO₂/TiO₂&Fe₂O₃(Mo)/SnO₂/TiO₂&Fe₂O₃(Mo)/SnO₂/TiO₂&Fe₂O₃(Mo)/SnO₂/TiO₂&F e₂O₃(Mo)/SnO₂/TiO₂&Fe₂O₃(Mo),
wherein TRASUB is as defined above and TiO₂&Fe₂O₃ means a mixed layer of TiO₂ and Fe₂O₃.

In another preferred embodiment the present invention is directed to pigments having the following layer structure:
TRASU B/SnO₂(Mo)/TiO₂;
TRASU B/SnO₂(Mo)/TiO₂/SnO₂(Mo)/TiO₂;
TRASU B/SnO₂/TiO₂/SnO₂(Mo)/TiO₂;
TRASU B/SnO₂/TiO₂/SnO₂(Mo)/TiO₂/TiO₂(Mo);
TRASU B/SnO₂(Mo)/TiO₂/SnO₂(Mo)/TiO₂/SnO₂(Mo)/TiO₂;
TRASU B/SnO₂(Mo)TiO₂/SnO₂(Mo)/TiO₂/SnO₂(Mo)/TiO₂/SnO₂(Mo)/TiO₂;
TRASU B/SnO₂(Mo)/TiO₂/SnO₂(Mo)/TiO₂/SnO₂(Mo)/TiO₂/SnO₂(Mo)/TiO₂/SnO₂(Mo)/TiO₂; wherein TRASUB is as defined above.

In another preferred embodiment the present invention is directed to pigments having the following layer structure:
TRASUB/SnO₂(Mo)/TiO₂(Mo); wherein TRASUB is as defined above.

The thickness of the TiO₂(Mo), or TiO₂ layer is in general in the range of 20 to 200 nm, especially 50 to 150 nm. The thickness of the SnO₂ layer is in general in the range of 1 to 20 nm, especially 1 to 10 nm

The transparent plate-like substrate consists preferably of natural, or synthetic mica, another layered silicate, natural, or synthetic glass, Al₂O₃, or SiO₂.

Metallic or non-metallic, inorganic platelet-shaped particles or pigments are effect pigments, (especially metal effect pigments or interference pigments), that is to say, pigments that, besides imparting colour to an application medium, impart additional properties, for example angle dependency of the colour (flop), lustre (not surface gloss) or texture. On metal effect pigments, substantially oriented reflection occurs at directionally oriented pigment particles. In the case of interference pigments, the colour-imparting effect is due to the phenomenon of interference of light in thin, highly refractive layers.

The (effect) pigments according to the invention can be used for all customary purposes, for example for colouring polymers in the mass, coatings (including effect finishes, including those for the automotive sector) and printing inks (including offset printing, intaglio printing, bronzing and flexographic printing), and also, for example, for applications in cosmetics, in ink-jet printing, for dyeing textiles, glazes for ceramics and glass as well as laser marking of papers and plastics. Such applications are known from reference works, for example "Industrielle Organische Pigmente" (W. Herbst and K. Hunger, VCH Verlagsgesellschaft mbH, Weinheim/New York, 2nd, completely revised edition, 1995).
When the pigments according to the invention are interference pigments (effect pigments), they may be goniochromatic and result in brilliant, highly saturated (lustrous) colours. They are accordingly very especially suitable for combination with conventional, transparent pigments, for example organic pigments such as, for example, diketopyrrolopyrroles, quinacridones, dioxazines, perylenes, isoindolinones etc., it being possible for the transparent pigment to have a similar colour to the effect pigment. Especially interesting combination effects are obtained, however, in analogy to, for example, EP-A-388 932 or EP-A-402 943, when the colour of the transparent pigment and that of the effect pigment are complementary.
The pigments according to the invention can be used with excellent results for pigmenting high molecular weight organic material.
The high molecular weight organic material for the pigmenting of which the pigments or pigment compositions according to the invention may be used may be of natural or synthetic origin. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

From the series of the polyaddition resins and polycondensation resins there may be mentioned, for example, condensation products of formaldehyde with phenols, so-called phenoplasts, and condensation products of formaldehyde with urea, thiourea or melamine, so-called aminoplasts, and the polyesters used as surface-coating resins, either saturated, such as alkyd resins, or unsaturated, such as maleate resins; also linear polyesters and polyamides, polyurethanes or silicones.
The said high molecular weight compounds may be present singly or in mixtures, in the form of plastic masses or melts. They may also be present in the form of their monomers or in the polymerised state in dissolved form as film-formers or binders for coatings or printing inks, such as, for example, boiled linseed oil, nitrocellulose, alkyd resins, melamine resins and urea-formaldehyde resins or acrylic resins.
Depending on the intended purpose, it has proved advantageous to use the effect pigments or effect pigment compositions according to the invention as toners or in the form of preparations. Depending on the conditioning method or intended application, it may be advantageous to add certain amounts of texture-improving agents to the effect pigment before or after the conditioning process, provided that this has no adverse effect on use of the effect pigments for colouring high molecular weight organic materials, especially polyethylene. Suitable agents are, especially, fatty acids containing at least 18 carbon atoms, for example stearic or behenic acid, or amides or metal salts thereof, especially magnesium salts, and also plasticisers, waxes, resin acids, such as abietic acid, rosin soap, alkylphenols or aliphatic alcohols, such as stearyl alcohol, or aliphatic 1,2-dihydroxy compounds containing from 8 to 22 carbon atoms, such as 1,2-dodecanediol, and also modified colophonium maleate resins or fumaric acid colophonium resins. The texture-improving agents are added in amounts of preferably from 0.1 to 30 % by weight, especially from 2 to 15 % by weight, based on the end product.
The (effect) pigments according to the invention can be added in any tinctorially effective amount to the high molecular weight organic material being pigmented. A pigmented substance composition comprising a high molecular weight organic material and from 0.01 to 80 % by weight, preferably from 0.1 to 30 % by weight, based on the high molecular weight organic material, of an pigment according to the invention is advantageous. Concentrations of from 1 to 20 % by weight, especially of about 10 % by weight, can often be used in practice.

High concentrations, for example those above 30 % by weight, are usually in the form of concentrates ("masterbatches") which can be used as colorants for producing pigmented materials having a relatively low pigment content, the pigments according to the invention having an extraordinarily low viscosity in customary formulations so that they can still be processed well.
For the purpose of pigmenting organic materials, the effect pigments according to the invention may be used singly. It is, however, also possible, in order to achieve different hues or colour effects, to add any desired amounts of other colour-imparting constituents, such as white, coloured, black or effect pigments, to the high molecular weight organic substances in addition to the effect pigments according to the invention. When coloured pigments are used in admixture with the effect pigments according to the invention, the total amount is preferably from 0.1 to 10 % by weight, based on the high molecular weight organic material. Especially high goniochromicity is provided by the preferred combination of an effect pigment according to the invention with a coloured pigment of another colour, especially of a complementary colour, with colorations made using the effect pigment and colorations made using the coloured pigment having, at a measurement angle of 10°, a difference in hue (ΔH*) of from 20 to 340, especially from 150 to 210.
Preferably, the effect pigments according to the invention are combined with transparent coloured pigments, it being possible for the transparent coloured pigments to be present either in the same medium as the effect pigments according to the invention or in a neighbouring medium. An example of an arrangement in which the effect pigment and the coloured pigment are advantageously present in neighbouring media is a multi-layer effect coating.
The pigmenting of high molecular weight organic substances with the pigments according to the invention is carried out, for example, by admixing such a pigment, where appropriate in the form of a masterbatch, with the substrates using roll mills or mixing or grinding apparatuses. The pigmented material is then brought into the desired final form using methods known *per se,* such as calendering, compression moulding, extrusion, coating, pouring or injection moulding. Any additives customary in the plastics industry, such as plasticisers, fillers or stabilisers, can be added to the polymer, in customary amounts, before or after incorporation of the pigment. In particular, in order to produce non-rigid shaped articles or to reduce their brittleness, it is desirable to add plasticisers, for example esters of phosphoric acid, phthalic acid or sebacic acid, to the high molecular weight compounds prior to shaping.
For pigmenting coatings and printing inks, the high molecular weight organic materials and the effect pigments according to the invention, where appropriate together with customary additives such as, for example, fillers, other pigments, siccatives or plasticisers, are finely dispersed or dissolved in the same organic solvent or solvent mixture, it being possible for the individual components to be dissolved or dispersed separately or for a number of components to be dissolved or dispersed together, and only thereafter for all the components to be brought together.
Dispersing an effect pigment according to the invention in the high molecular weight organic material being pigmented, and processing a pigment composition according to the invention, are preferably carried out subject to conditions under which only relatively weak shear forces occur so that the effect pigment is not broken up into smaller portions.
Plastics comprising the pigment of the invention in amounts of 0.1 to 50 % by weight, in particular 0.5 to 7 % by weight. In the coating sector, the pigments of the invention are employed in amounts of 0.1 to 10 % by weight. In the pigmentation of binder systems, for example for paints and printing inks for intaglio, offset or screen printing, the pigment is incorporated into the printing ink in amounts of 0.1 to 50 % by weight, preferably 5 to 30 % by weight and in particular 8 to 15 % by weight.

The colorations obtained, for example in plastics, coatings or printing inks, especially in coatings or printing inks, more especially in coatings, may be distinguished by excellent properties, especially by extremely high saturation, outstanding fastness properties, high color purity and high goniochromaticity.

When the high molecular weight material being pigmented is a coating, it is especially a speciality coating, very especially an automotive finish.
The effect pigments according to the invention are also suitable for making-up the lips or the skin and for colouring the hair or the nails.
The invention accordingly relates also to a cosmetic preparation or formulation comprising from 0.0001 to 90 % by weight of a pigment, especially an effect pigment, according to the invention and from 10 to 99.9999 % of a cosmetically suitable carrier material, based on the total weight of the cosmetic preparation or formulation.
Such cosmetic preparations or formulations are, for example, lipsticks, blushers, foundations, nail varnishes and hair shampoos.
The pigments may be used singly or in the form of mixtures. It is, in addition, possible to use pigments according to the invention together with other pigments and/or colorants, for example in combinations as described hereinbefore or as known in cosmetic preparations.

The cosmetic preparations and formulations according to the invention preferably contain the pigment according to the invention in an amount from 0.005 to 50 % by weight, based on the total weight of the preparation.
Suitable carrier materials for the cosmetic preparations and formulations according to the invention include the customary materials used in such compositions.
The cosmetic preparations and formulations according to the invention may be in the form of, for example, sticks, ointments, creams, emulsions, suspensions, dispersions, powders or solutions. They are, for example, lipsticks, mascara preparations, blushers, eye-shadows, foundations, eyeliners, powder or nail varnishes.
If the preparations are in the form of sticks, for example lipsticks, eye-shadows, blushers or foundations, the preparations consist for a considerable part of fatty components, which may consist of one or more waxes, for example ozokerite, lanolin, lanolin alcohol, hydrogenated lanolin, acetylated lanolin, lanolin wax, beeswax, candelilla wax, microcrystalline wax, carnauba wax, cetyl alcohol, stearyl alcohol, cocoa butter, lanolin fatty acids, petrolatum, petroleum jelly, mono-, di- or tri-glycerides or fatty esters thereof that are solid at 25°C, silicone waxes, such as methyloctadecane-oxypolysiloxane and poly(dimethylsiloxy)-stearoxysiloxane, stearic acid monoethanolamine, colophane and derivatives thereof, such as glycol abietates and glycerol abietates, hydrogenated oils that are solid at 25°C, sugar glycerides and oleates, myristates, lanolates, stearates and dihydroxystearates of calcium, magnesium, zirconium and aluminium.
The fatty component may also consist of a mixture of at least one wax and at least one oil, in which case the following oils, for example, are suitable: paraffin oil, purcelline oil, perhydrosqualene, sweet almond oil, avocado oil, calophyllum oil, castor oil, sesame oil, jojoba oil, mineral oils having a boiling point of about from 310 to 410°C, silicone oils, such as dimethylpolysiloxane, linoleyl alcohol, linolenyl alcohol, oleyl alcohol, cereal grain oils, such as wheatgerm oil, isopropyl lanolate, isopropyl palmitate, isopropyl myristate, butyl myristate, cetyl myristate, hexadecyl stearate, butyl stearate, decyl oleate, acetyl glycerides, octanoates and decanoates of alcohols and polyalcohols, for example of glycol and glycerol, ricinoleates of alcohols and polyalcohols, for example of cetyl alcohol, isostearyl alcohol, isocetyl lanolate, isopropyl adipate, hexyl laurate and octyl dodecanol.
The fatty components in such preparations in the form of sticks may generally constitute up to 99.91 % by weight of the total weight of the preparation.
The cosmetic preparations and formulations according to the invention may additionally comprise further constituents, such as, for example, glycols, polyethylene glycols, polypropylene glycols, monoalkanolamides, non-coloured polymeric, inorganic or organic fillers, preservatives, UV filters or other adjuvants and additives customary in cosmetics, for example a natural or synthetic or partially synthetic di- or tri-glyceride, a mineral oil, a silicone oil, a wax, a fatty alcohol, a Guerbet alcohol or ester thereof, a lipophilic functional cosmetic active ingredient, including sun-protection filters, or a mixture of such substances.

A lipophilic functional cosmetic active ingredient suitable for skin cosmetics, an active ingredient composition or an active ingredient extract is an ingredient or a mixture of ingredients that is approved for dermal or topical application. The following may be mentioned by way of example:
- active ingredients having a cleansing action on the skin surface and the hair; these include all substances that serve to cleanse the skin, such as oils, soaps, synthetic detergents and solid substances;
- active ingredients having a deodorising and perspiration-inhibiting action: they include antiperspirants based on aluminium salts or zinc salts, deodorants comprising bactericidal or bacteriostatic deodorising substances, for example triclosan, hexachlorophene, alcohols and cationic substances, such as, for example, quaternary ammonium salts, and odour absorbers, for example ^{®}Grillocin (combination of zinc ricinoleate and various additives) or triethyl citrate (optionally in combination with an antioxidant, such as, for example, butyl hydroxytoluene) or ion-exchange resins;
- active ingredients that offer protection against sunlight (UV filters): suitable active ingredients are filter substances (sunscreens) that are able to absorb UV radiation from sunlight and convert it into heat; depending on the desired action, the following light-protection agents are preferred: light-protection agents that selectively absorb sunburn-causing high-energy UV radiation in the range of approximately from 280 to 315 nm (UV-B absorbers) and transmit the longer-wavelength range of, for example, from 315 to 400 nm (UV-A range), as well as light-protection agents that absorb only the longer-wavelength radiation of the UV-A range of from 315 to 400 nm (UV-A absorbers); suitable light-protection agents are, for example, organic UV absorbers from the class of the p-aminobenzoic acid derivatives, salicylic acid derivatives, benzophenone derivatives, dibenzoylmethane derivatives, diphenyl acrylate derivatives, benzofuran derivatives, polymeric UV absorbers comprising one or more organosilicon radicals, cinnamic acid derivatives, camphor derivatives, trianilino-s-triazine derivatives, phenyl-benzimidazolesulfonic acid and salts thereof, menthyl anthranilates, benzotriazole derivatives, and/or an inorganic micropigment selected from aluminium oxide- or silicon dioxide-coated TiO₂, zinc oxide or mica;
- active ingredients against insects (repellents) are agents that are intended to prevent insects from touching the skin and becoming active there; they drive insects away and evaporate slowly; the most frequently used repellent is diethyl toluamide (DEET); other common repellents will be found, for example, in "Pflegekosmetik" (W. Raab and U. Kindl, Gustav-Fischer-Verlag Stuttgart/New York.1991) on page 161;
- active ingredients for protection against chemical and mechanical influences: these include all substances that form a barrier between the skin and external harmful substances, such as, for example, paraffin oils, silicone oils, vegetable oils, PCL products and lanolin for protection against aqueous solutions, film-forming agents, such as sodium alginate, triethanolamine alginate, polyacrylates, polyvinyl alcohol or cellulose ethers for protection against the effect of organic solvents, or substances based on mineral oils, vegetable oils or silicone oils as "lubricants" for protection against severe mechanical stresses on the skin;
- moisturising substances: the following substances, for example, are used as moisture-controlling agents (moisturisers): sodium lactate, urea, alcohols, sorbitol, glycerol, propylene glycol, collagen, elastin and hyaluronic acid;
- active ingredients having a keratoplastic effect: benzoyl peroxide, retinoic acid, colloidal sulfur and resorcinol;
- antimicrobial agents, such as, for example, triclosan or quaternary ammonium compounds;
- oily or oil-soluble vitamins or vitamin derivatives that can be applied dermally: for example vitamin A (retinol in the form of the free acid or derivatives thereof), panthenol, pantothenic acid, folic acid, and combinations thereof, vitamin E (tocopherol), vitamin F; essential fatty acids; or niacinamide (nicotinic acid amide);
- vitamin-based placenta extracts: active ingredient compositions comprising especially vitamins A, C, E, B₁, B₂, B₆, B₁₂, folic acid and biotin, amino acids and enzymes as well as compounds of the trace elements magnesium, silicon, phosphorus, calcium, manganese, iron or copper;
- skin repair complexes: obtainable from inactivated and disintegrated cultures of bacteria of the bifidus group;
- plants and plant extracts: for example amica, aloe, beard lichen, ivy, stinging nettle, ginseng, henna, camomile, marigold, rosemary, sage, horsetail or thyme;
- animal extracts: for example royal jelly, propolis, proteins or thymus extracts;
- cosmetic oils that can be applied dermally: neutral oils of the Miglyol 812 type, apricot kernel oil, avocado oil, babassu oil, cottonseed oil, borage oil, thistle oil, groundnut oil, gamma-oryzanol, rosehip-seed oil, hemp oil, hazelnut oil, blackcurrant-seed oil, jojoba oil, cherry-stone oil, salmon oil, linseed oil, cornseed oil, macadamia nut oil, almond oil, evening primrose oil, mink oil, olive oil, pecan nut oil, peach kernel oil, pistachio nut oil, rape oil, rice-seed oil, castor oil, safflower oil, sesame oil, soybean oil, sunflower oil, tea tree oil, grapeseed oil or wheatgerm oil.

The preparations in stick form are preferably anhydrous but may in certain cases comprise a certain amount of water which, however, in general does not exceed 40 % by weight, based on the total weight of the cosmetic preparation.
If the cosmetic preparations and formulations according to the invention are in the form of semi-solid products, that is to say in the form of ointments or creams, they may likewise be anhydrous or aqueous. Such preparations and formulations are, for example, mascaras, eyeliners, foundations, blushers, eye-shadows, or compositions for treating rings under the eyes.
If, on the other hand, such ointments or creams are aqueous, they are especially emulsions of the water-in-oil type or of the oil-in-water type that comprise, apart from the pigment, from 1 to 98.8 % by weight of the fatty phase, from 1 to 98.8 % by weight of the aqueous phase and from 0.2 to 30 % by weight of an emulsifier.
Such ointments and creams may also comprise further conventional additives, such as, for example, perfumes, antioxidants, preservatives, gel-forming agents, UV filters, colorants, pigments, pearlescent agents, non-coloured polymers as well as inorganic or organic fillers.
If the preparations are in the form of a powder, they consist substantially of a mineral or inorganic or organic filler such as, for example, talcum, kaolin, starch, polyethylene powder or polyamide powder, as well as adjuvants such as binders, colorants etc..
Such preparations may likewise comprise various adjuvants conventionally employed in cosmetics, such as fragrances, antioxidants, preservatives etc..
If the cosmetic preparations and formulations according to the invention are nail varnishes, they consist essentially of nitrocellulose and a natural or synthetic polymer in the form of a solution in a solvent system, it being possible for the solution to comprise other adjuvants, for example pearlescent agents.
In that embodiment, the coloured polymer is present in an amount of approximately from 0.1 to 5 % by weight.
The cosmetic preparations and formulations according to the invention may also be used for colouring the hair, in which case they are used in the form of shampoos, creams or gels that are composed of the base substances conventionally employed in the cosmetics industry and a pigment according to the invention.
The cosmetic preparations and formulations according to the invention are prepared in conventional manner, for example by mixing or stirring the components together, optionally with heating so that the mixtures melt.

Various features and aspects of the present invention are illustrated further in the examples that follow. While these examples are presented to show one skilled in the art how to operate within the scope of this invention, they are not to serve as a limitation on the scope of the invention where such scope is only defined in the claims. Unless otherwise indicated in the following examples and elsewhere in the specification and claims, all parts and percentages are by weight, temperatures are in degrees centigrade and pressures are at or near atmospheric.

### Examples

### Example 1

20 g of natural mica (particle size 10 to 60 microns, specific surface of 3.5 m²/g) are suspended in water at 90°C, the pH of which is set to 1.5 with HCl.
1) 5 ml of a solution containing 9 g of SnCl₄·5H₂O, 5 g of 37% HCl, 1g glycine and 100 g H₂O is added to the suspension at a rate of 1.5 ml per minute while keeping the pH at 1.5 with addition of 1 M KOH solution.
2) Then the pH is set to 1.8 and 346.75 ml of a solution containing 34g of TiOCl₂, 32g of 37% HCl, 5.11 g of glycine, 0.5 g of MoCl₅ and 445g distilled water are added to the suspension at a rate of 1.5 ml/minute while keeping the pH at 1.8 with 1 M KOH.
3) Step 1) is repeated.
4) Step 2) is repeated.
5) Step 1) is repeated.
6) Step 2) is repeated.
7) Step 1) is repeated.
8) Step 2) is repeated.

Then the suspension is filtered and dried, giving 25 g of a very bright blue-green powder.
21 g dried powder is heated at 750°C under 3 mbar of Ar during 1 hour, giving, after cooling, 20 g of a very bright dark blue-green colour with a colour flop toward violet.
24 g of the dried powder is heated at 750°C under air giving, after cooling, 24 g of a light grey powder, which features a strong green-blue colour on a white or black background.

The pigment of example 1 is tested following the procedure described below (Methylene Blue Test) and demonstrated an improved photostability against a similar sample made without Mo (only with TiO₂).

### Methylene Blue Test

The photocatalytic activity of the samples is evaluated by photo-degradation of methylene blue: 50 mg of effect pigment in 5 g water are stirred by a magnetic stirrer in the presence of 1 drop of methylene blue solution and exposed to light. A comparison sample is prepared and agitated at the same time under light exclusion. Colour changes of the samples are evaluated each half hour (4x) with regard to the comparison sample.

### Example 2

20 g of natural mica (particle size 10 to 60 microns, specific surface of 3.5 m²/g) are suspended in water at 90°C, the pH of which is set to 1.5 with HCl.
1) 5 ml of a solution containing 9 g of SnCl₄-5H₂O, 5 g of 37% HCl and 100 g H₂O is added to the suspension at a rate of 1.5 ml per minute while keeping the pH at 1.5 by the addition of 1 M KOH solution.
2) Then the pH is set to 1.8 and 346.75 ml of a solution containing 34g of TiOCl₂, 32g of 37% HCl, 0.5 g of MoCl₅ and 445g distilled water are added to the suspension at a rate of 1.5 ml/minute while keeping the pH at 1.8 with 1 M KOH.
3) Step 1) is repeated.
4) Step 2) is repeated.
5) Step 1) is repeated.
6) Step 2) is repeated.
7) Step 1) is repeated.
8) Step 2) is repeated.

Then the suspension is filtered and dried, giving 29 g of a very bright blue powder with a color flop toward violet.

### Example 3

20 g of natural mica (particle size 10 to 60 microns, specific surface of 3.5 m²/g) are suspended in water at 90°C, the pH of which is set to 1.5 with HCl.
1) 5 ml of a solution containing 9 g of SnCl₄·5H₂O, 5 g of 37% HCl and 100 g H₂O is added to the suspension at a rate of 1.5 ml per minute while keeping the pH at 1.5 with addition of 1 M KOH solution.
2) Then the pH is set to 1.8 and 346.75 ml of a solution containing 34g of TiOCl₂, 32g of 37% HCl, 0.5 g of MoCl₅, 4 g FeCl₃·6H₂O and 445g distilled water are added to the suspension at a rate of 1.5 ml/minute while keeping the pH at 1.8 with 1 M KOH.
3) Step 1) is repeated.
4) Step 2) is repeated.
5) Step 1) is repeated.
6) Step 2) is repeated.
7) Step 1) is repeated.
8) Step 2) is repeatad.

Then the suspension is filtered and dried, giving 31.9 g of a very bright orange powder. 19 g are heated at 750°C under Ar, leading to 17.77 g of a dark orange powder. 22.9 g are heated under air at 750°C leading to a very bright sparkling orange powder.

### Example 4

Synthetic mica flakes ("40-160" supplied by Sanbao Pearl Luster Mica Co.Ltd, Chanping Rd., Shantou, GD, China) are first dry sieved to eliminate all particles smaller than 56 microns and larger than 100 microns. 20 g of the sieved synthetic mica flakes are dispersed in 300 ml deionised water at 90°C at a stirring speed set at 500 U/min in a 750 ml glass reactor. The pH is set and kept constant at 1.5 with 1 molar KOH while adding 5 ml of a solution containing 9 g of SnCl₄·5H₂O, 5 g of 37% HCl and 100 g H₂O at speed of 0.4 ml/min. Then the pH is set and kept at 1.8 with 1 molar KOH while adding 150 ml of solution containing 34g of TiOCl₂, 32g of 37% HCl, 0.5 g of MoCl₅, 4 g FeCl₃·6H₂O and 445g distilled water at a speed of 1.5 ml/min. The coated flakes are filtered, dried, heated at 850 °C under nitrogen atmosphere for 0.5 hour and then heated under dry air at 850°C for 0 5 hours. The heated material Is sieved again to eliminate all particles smaller than 56 microns. The obtained product (9.13 % Ti, 0.45 % Sn, 0.46 % Fe, 0.31 % Mo) is a pink-like powder yielding a sparkling silver pearl colour when applied on skin, or a black background

### Example 5

20 g of natural mica (particle size 10 to 60 microns, specific surface of 3.5 m²/g) are suspended in water at 90°C, the pH of which is set to 1.5 with HCl.
1) 5 ml of a solution containing 9 g of SnCl₄·5H₂O, 5 g of 37% HCl and 100 g H₂O is added to the suspension at a rate of 0.4 ml per minute while keeping the pH at 1.5 by the addition of 1M KOH solution.
2) Then the pH is set to 1.8 and 650 ml of a solution containing, 34g of TiOCl₂, 32g of 37% HCl and 445g distilled water are added to the suspension at a rate of 1.5 ml/minute while keeping the pH at 1.8 with 1M KOH.
3) 5 ml of a solution containing 9 g of SnCl₄·5H₂O, 5 g of 37% HCl and 100 g H₂O and 2 g of MoCl₅ is added to the suspension at a rate of 0.4 ml per minute while keeping the pH at 1.5 by the addition of 1 M KOH solution.
4) Step 2) is repeated.

Then the suspension is filtered and dried, giving 45 g of a very bright blue powder with a colour flop toward violet. The bright blue powder is then heated under nitrogen at 750°C during 1 hour. The result is an even bright blue powder showing high opacity. X-ray diffraction spectrums indicate that the phase of TiO₂ is rutile. The elementary analysis is shown below: .....

| **Ti (%)** | **Sn (%)** | **Fe (%)¹⁾** | **Mo (%)** |
|---|---|---|---|
| 30.1 | 3.42 | 0.47 | 0.64 |

| | | | |
|---|---|---|---|
| ¹⁾ The natural mica used as substrate contains iron. | | | |

Pictures from transmission electronic microscopy indicate a TiO₂ layer thickness of 130 ± 10 nm.

## Claims

1. A pigment, comprising a plate-like substrate, and
a layer of SnO₂, and/or a layer of a metal oxide, which is selected from Fe₂O₃, TiO₂, ZrO₂ and/or HfO₂, said layer being doped with Mo, and/or W, wherein the layer of SnO₂ comprises 0.1 to 60 mole % Mo and/or W, based on the moles metal in the SnO₂ layer, and the metal oxide layer of Fe₂O₃, TiO₂, ZrO₂ and/or HfO₂ comprises 0.1 to 10 mole % Mo and/or W, based on the moles metal in the metal oxide

2. The pigment according to claim 1, wherein the metal oxide is TiO₂, Fe₂O₃, or a mixture of Fe₂O₃ and TiO₂.

3. The pigment according to claim 2, wherein the metal oxide is TiO₂ and the metal oxide layer comprises 0.1 to 5 mole % Mo and/or W, based on the moles Ti in the TiO₂.

4. The pigment according to claim 3, wherein the doping agent is Mo.

5. The pigment according to claim 2, wherein the metal oxide layer comprises in addition carbon, B₂O₃, Al₂O3 and/or MgO.

6. The pigment according to claim 1, wherein the pigment has the following layer structure:
Al/SiO₂/TiO₂(Mo);
Al/SiO₂/Fe₂O₃(Mo);
TRASUB/TiO₂(Mo)/SnO₂/TiO₂(Mo);
TRASUB/TiO₂(Mo)/SnO₂/TiO₂(Mo)SnO₂/TiO₂(Mo),
TRASUB/TiO₂(Mo)/SnO₂(Mo)/SnO₂/TiO₂(Mo)/SnO₂/TiO₂(Mo),
TRASUB/SnO₂/TiO₂(Mo);
TRASUB/SnO₂/TiO₂(Mo)/SnO₂/TiO₂(Mo);
TRASUB/SnO₂/TiO₂(Mo)/SnO₂/TiO₂(Mo)/SnO₂/TiO₂(Mo);
TRASUB/SnO₂/TO₂₍Mo)SnO₂/TiO₂(Mo)/SnO₂/TiO₂(Mo)/SnO₂/TiO₂(Mo);
TRASUB/SnO₂/TiO₂(Mo)SnO₂/TiO₂(Mo)/SnO₂/TiO₂(Mo)SnO₂/TiO₂(Mo)/SnO₂/TiO₂(Mo)
TRASUB/SnO₂(Mo)/TiO₂;
TRASUB/SnO₂(Mo)/TiO₂/SnO₂(Mo)/TiO₂;
TRASUB/SnO₂/TiO₂/SnO₂(Mo)/TiO₂;
TRASUB/SnO₂/TiO₂/SnO₂(Mo)TiO₂/TiO₂(Mo);
TRASUB/SnO₂(Mo)TiO₂/SnO₂(Mo)/TiO₂/SnO₂(Mo)/TiO₂;
TRASUB/SnO₂(Mo)/TiO₂/SnO₂(Mo)/TiO₂/SnO₂(Mo)TiO₂/SnO₂(Mo)TiO₂;
TRASUB/SnO₂(Mo)TiO₂/SnO₂(Mo)/TiO₂/SnO₂(Mo)TiO₂SnO₂(Mo)/TiO₂/SnO₂(Mo)/TiO₂
TRASUB/SnO₂(Mo)/TiO₂(Mo);
TRASUB/Fe₂O₃(Mo);
TRASUB/TiO₂&Fe₂O₃(Mo);
TRASUB/SnO₂/TiO₂&Fe₂O₃(Mo);
TRASUB/SnO₂/TiO₂&Fe₂O3(Mo)/SnO₂/TiO₂&Fe₂O₃(Mo);
TRASUB/SnO₂/TiO₂&Fe₂O₃(Mo)/SnO₂/TiO₂&Fe₂O₃(Mo)/SnO₂/TiO₂&Fe₂O₃(Mo);
TRASUB/SnO₂/TiO₂&Fe₂O₃(Mo)/SnO₂/TiO₂&Fe₂O₃(Mo)/SnO₂/TiO₂&Fe₂O₃(Mo)/SnO₂/Ti O₂&Fe₂O₃(Mo);
TRASUB/SnO₂/TiO₂&Fe₂O₃(Mo)/SnO₂/TiO₂&Fe₂O₃(Mo)/SnO₂/TiO₂&Fe₂O₃(Mo)/SnO₂/Ti O₂&Fe₂O₃(Mo)/SnO₂/TiO₂&Fe₂O₃(Mo),
wherein TRASUB is a transparent, or semitransparent substrate having a low index of refraction, especially natural, or synthetic mica, another layered silicate, natural, or synthetic glass, Al₂O₃, SiO_{z}, especially SiO₂, SiO_{z}/SiOₓ/SiO₂(0.03≤ x s 0.95), SiO_{1.40-2.0}/SiO_{0.70-0.99}/SiO1.40-2.0, or Si/SiO_{z} with 0.70 ≤ z ≤ 2.0, especially 1.40 ≤ z ≤ 2.0; or the pigment has the following layer structure:
| | | | |
|---|---|---|---|
| TRASUB | TiO₂(Mo) | | |
| TRASUB | Fe₂O₃(Mo) | | |
| TRASUB | TiO₂(Mo) | SiO₂ | TiO₂ |
| TRASUB | TiO₂ | SiO₂ | TiO₂(Mo) |
| TRASUB | TiO₂(Mo) | SiO₂ | TiO₂(Mo) |
| TRASUB | TiO₂(Mo) | SlO₂ | TiO₂/Fe₂O₃ |
| TRASUB | (Sn,Sb)O₂ | SiO₂ | TiO₂(Mo) |
| TRASUB | TiO₂/Fe₂O₃ | SiO₂ | TiO₂(Mo) |
| TRASUB | Cr₂O₃ | SiO₂ | TiO₂(Mo) |
| TRASUB | Fe₂O₃ | SiO₂ | TiO₂(Mo) |
| TRASUB | TiO₂(Mo) | SiO₂ | Fe₂O₃ |
| TRASUB | TiO suboxides | SiO₂ | TiO₂(Mo) |
| TRASUB | TiO₂(Mo) | SiO₂ | TiO suboxides |
| TRASUB | TiO₂(Mo) | SiO₂ | TiO₂ + SiO₂ + TiO₂ |
| TRASUB | TiO₂ + SiO₂+ TiO₂ | SiO₂ | TiO₂(Mo) |
| TRASUB | TiO₂(Mo) | Al₂O₃ | TiO₂ |
| TRASUB | TiO₂ | Al₂O₃ | TiO₂(Mo) |
| TRASUB | Fe₂TiOₛ | SiO₂ | TiO₂(Mo) |
| TRASUB | TiO₂(Mo) | SiO₂ | Fe₂TiO₅/TiO₂ |
| TRASUB | STL | TiO₂(Mo) | |
| TRASUB | STL | TiO₂(Mo) | TiO₂ |
| TRASUB | STL | SiO₂ | TiO₂(Mo) |
wherein TRASUB is a transparent, or semitransparent substrate having a low index of refraction, especially natural, or synthetic mica, another layered, silicate, natural, or synthetic glass, Al₂O₃, SiO_{z}, especially SiO₂, SiO₂/SiOₓSiO₂(0.03 ≤ x ≤ 0.95), SiO_{1.40-2.0}/SiO_{0.70-0.99}/SiO_{1.40-2.0}, or Si/SiO_{z} with 0.70 ≤ z ≤ 2.0, especially 1.40 ≤ z ≤ 2.0, and STL is a semi-transparent layer, such as, for example, a semi-transparent metal layer of Cu, Ag, Cr, or Sn, or a semitransparent carbon layer, wherein tin dioxide can be deposited before titanium dioxide and/or TiO₂(Mo) precipitation; or the pigment comprises, a platelet-like substrate, and (a) a layer structure: TiO₂(Mo)/TiO₂, or TiO₂/TiO₂(Mo)/TiO₂; or TiO₂(Mo)/a layer of a metal oxide of low refractive index, especially SiO₂, Al₂O₃, AlOOH, B₂O₃, or a mixture thereof, wherein alkali or earth alkali metal oxides can be contained as additional component/a layer of a metal oxide of high refractive index, especially TiO₂, ZrO₂, Fe₂O₃, Fe₃O₄, Cr₂O₃, ZnO or a mixture of these oxides; or TiO₂(Mo)/a layer of a metal oxide of low refractive index, especially SiO₂, Al₂O₃, AlOOH, B₂O₃, or a mixture thereof; wherein alkali or earth alkali metal oxides can be contained as additional component/TiO₂(Mo).

7. The pigment according to claim 3, wherein the TiO₂ layer is doped uniformly by the metal or the content of the doping metal is highest next to the substrate and decreases across the TiO₂ layer; and/or the metal is incorporated in the outermost 20 nm of the TiO₂ layer.

8. The pigment according to claim 1, wherein the pigment has the following layer structure:
plate-like (transparent) substrate/[SnO₂/TiO₂(Mo)]ₙ with n = 1, 2, 3, 4, or 5, especially *2, 3, 4, or 5; or
plate-like (transparent) substratel[SnO₂(Mo)/TiO₂]ₙ with n = 1, 2, 3, 4, or 5, especially 2, 3, 4, or 5.

9. The pigment according to claim 8, wherein the (transparent) substrate is selected from natural mica synthetic mica, SiO₂ flakes, Al₂O₃ flakes, natural glass flakes and synthetic glass flakes.

10. A process for producing the (interference) pigment according to claim 1, by coating plate-like substrates with at least two metal oxides in a wet process by hydrolysis of the corresponding water-soluble metal compounds, by separating, drying and optionally calcinating the pigment thus obtained, wherein the first metal oxide(s) is selected from SnO₂; or Fe₂O₃, TiO₂, ZrO₂ and/or HfO₂, and the second metal oxide is selected from Mo and W; .

11. Use of the pigments according to any of claims 1 to 9 in paints, ink-jet printing, for dyeing textiles, for pigmenting coatings, printing inks, plastics, cosmetics, glazes for ceramics and glass.

12. Paints, printing inks, plastics, cosmetics, ceramics and glass, which are pigmented with a pigment according to any of claims 1 to 9.

13. A method for pigmenting high molecular weight organic material by incorporating an effective pigmenting amount of a pigment according to claim 1 into said high molecular, weight organic maternal.

## Patentansprüche

1. Pigment, umfassend ein plättchenartiges Substrat
und
eine Schicht aus SnO₂ und/oder eine Schicht aus einem Metalloxid, das unter Fe₂O₃, TiO₂, ZrO₂ und/oder HfO₂ ausgewählt ist, wobei die Schicht mit Mo und/oder W dotiert ist, wobei die Schicht aus SnO₂ 0,1 bis 60 Mole-% Mo und/oder W, bezogen auf die Mole Metall in der SnO₂-Schicht, umfaßt und die Metalloxidschicht aus Fe₂O₃, TiO₂, ZrO₂ und/oder HfO₂ 0,1 bis 10 Mole-% Mo und/oder W, bezogen auf die Mole Metall in der Metalloxidschicht, umfaßt.

2. Pigment nach Anspruch 1, wobei es sich bei dem Metalloxid um TiO₂, Fe₂O₃ oder eine Mischung von Fe₂O₃ und TiO₂ handelt.

3. Pigment nach Anspruch 2, wobei es sich bei dem Metalloxid um TiO₂ handelt und die Metalloxidschicht 0,1 bis 5 Mol-% Mo und/oder W, bezogen auf die Mole Ti in dem TiO₂, umfaßt.

4. Pigment nach Anspruch 3, wobei es sich bei dem Dotiermittel um Mo handelt.

5. Pigment nach Anspruch 2, wobei die Metalloxidschicht außerdem Kohlenstoff, B₂O₃, Al₂O₃ und/oder MgO umfaßt.

6. Pigment nach Anspruch 1, wobei das Pigment die folgende Schichtstruktur aufweist:
Al/SiO₂/TiO₂(Mo);
Al/SiO_{2/}Fe₂O₃(Mo);
TRASUB/TiO₂(Mo)/SnO₂/TiO₂(Mo);
TRASUB/TiO₂(Mo)/SnO₂/TiO₂(Mo)/SnO₂/TiO₂(Mo);
TRASUB/TiO₂(Mo)/SnO₂/TiO₂(Mo) /SnO₂/TiO₂(Mo) /SnO₂/TiO₂ (Mo);
TRASUB/SnO₂/TiO₂(Mo);
TRASUB/SnO₂/TiO₂(Mo)/SnO₂/TiO₂(Mo);
TRASUB/SnO_{2/}TiO₂(Mo)/SnO₂/TiO₂(Mo)/SnO₂/TiO₂(Mo);
TRASUB/SnO₂/TiO₂(Mo)/SnO₂/TiO₂(Mo)/SnO₂/TiO₂(Mo) /SnO₂ /TiO₂(Mo);
TRASUB/SnO₂/TiO₂(Mo)/SnO₂/TiO₂(Mo)/SnO₂/TiO₂(Mo) /SnO2 /TiO₂(Mo)/SnO₂/TiO₂(Mo);
TRASUB/SnO₂(Mo)/TiO₂;
TRASUB/SnO₂(Mo)/TlO₂/SnO₂(Mo)/TiO₂;
TRASUB/SnO₂/TiO₂/SnO₂(Mo)/TiO₂;
TRASUB/SnO₂/TiO₂/SnO₂(Mo)/TiO₂/TiO₂(Mo);
TRASUB/SnO₂(Mo) /TiO₂/SnO₂(Mo) /TiO₂/SnO₂(Mo) /TiO₂;
TRASUB/SnO₂(Mo) /TiO₂/SnO₂(Mo) /TiO₂/SnO₂(Mo) /TiO₂/SnO₂ (Mo) /TiO₂;
TRASUB /SnO₂(Mo) /TiO₂ /SnO₂(Mo) /TiO₂ /SnO₂(Mo) /TiO₂/SnO2 (Mo) /TiO₂/SnO₂ (Mo) /TiO₂;
TRASUB/SnO(Mo)/TiO₂(Mo);
TRASUB/Fe₂O₃(Mo);
TRASUB/TiO₂&Fe₂O₃ (Mo);
TRASUB/SnO₂/TiO₂&Fe₂O₃ (Mo);
TRASUB/SnO₂/TiO₂&Fe₂O₃ (Mo) /SnO₂/TiO₂&Fe₂O₃ (Mo);
TRASUB/SnO₂/TiO₂&Fe₂O₃ (Mo) /SnO₂/TiO₂&Fe₂O₃ (Mo) /SnO₂/ TiO₂&Fe₂O₃ (Mo);
TRASUB/SnO₂/TiO₂&Fe₂O₃(Mo)/SnO₂/TiO₂&Fe₂O₃(Mo)/SnO₂/ TiO₂&Fe₂O₃(Mo)/SnO₂/TiO₂&Fe₂O₃(Mo);
TRASUB/SnO₂/TiO₂&Fe₂O₃(Mo)/SnO₂/TiO₂&Fe₂O₃(Mo)/SnO₂/ TiO₂&Fe₂O₃(Mo)/SnO₂/TiO2_{&}Fe₂O₃(Mo)/SnO₂/TiO_{2&}Fe₂O₃(Mo) ;
worin TRASUB ein transparentes oder halbtransparentes Substrat mit niedrigem Brechungsindex, insbesondere natürlicher oder synthetischer Glimmer, ein anderes Schichtsilicat, natürliches oder synthetisches Glas, Al₂O₃, SiO_{z}, insbesondere SiO₂, SiO₂/SiOₓ/SiO₂ (0,03 ≤ x ≤ 0,95), SiO_{1,40-2,0}/SiO_{0,70}-_{0,99}/SiO_{1,40-2,0} oder Si/SiO₂ mit 0,70 ≤ z ≤ 2,0, insbesondere 1,40 ≤ z ≤ 2,0, ist; oder das Pigment die folgende Schichtstruktur aufweist:
| | | | |
|---|---|---|---|
| TRASUB | TiO₂(Mo) | | |
| TRASUB | Fe₂O₃(Mo) | | |
| TRASUB | TiO₂(Mo) | SiO₂ | TiO₂ |
| TRASUB | TiO₂ | SiO₂ | TiO₂(Mo) |
| TRASUB | TiO₂(Mo) | SiO₂ | TiO₂(Mo) |
| TRASUB | TiO₂(Mo) | SiO₂ | TiO₂/Fe₂o₃ |
| TRASUB | (Sn,Sb)O₂ | SiO₂ | TiO₂(Mo) |
| TRASUB | TiO₂/Fe₂O₃ | SiO₂ | TiO₂(Mo) |
| TRASUB | Cr₂O₃ | SiO₂ | TiO₂(Mo) |
| TRASUB | Fe₂O₃ | SiO₂ | TiO₂(Mo) |
| TRASUB | TiO₂(Mo) | SiO₂ | Fe₂O₃ |
| TRASUB | TiO-Suboxide | SiO₂ | TiO₂(Mo) |
| TRASUB | TiO₂(Mo) | SiO₂ | TiO-Suboxide |
| TRASUB | TiO₂(Mo) | SiO₂ | TiO₂+SiO₂+TiO₂ |
| TRASUB | TiO₂+SiO₂+TiO₂ | SiO₂ | TiO₂(Mo) |
| TRASUB | TiO₂(Mo) | Al₂O₃ | TiO₂ |
| TRASUB | TiO₂ | Al₂O₃ | TiO₂(Mo) |
| TRASUB | Fe₂TiO₅ | SiO₂ | TiO₂(Mo) |
| TRASUB | TiO₂(Mo) | SiO₂ | Fe₂TiO₅/TiO₂ |
| TRASUB | STL | TiO₂(Mo) | |
| TRASUB | STL | TiO₂(Mo) | TiO₂ |
| TRASUB | STL | SiO₂ | TiO₂(Mo) |
worin TRASUB ein transparentes oder halbtransparentes Substrat mit niedrigem Brechungsindex, insbesondere natürlicher oder synthetischer Glimmer, ein anderes Schichtsilicat, natürliches oder synthetisches Glas, Al₂O₃, SiO_{z}, insbesondere SiO₂, SiO₂/SiO₂/SiO₂ (0,03 ≤ x ≤ 0,95), SiO_{1,40-2,0}/SiO_{0,70}-_{0,99}/SiO_{1,40-2,0} oder Si/SiO_{z} mit 0, 70 ≤ z ≤ 2,0, insbesondere 1,40 ≤ z ≤ 2,0, ist und STL eine halbtransparente Schicht, wie beispielsweise eine halbtransparente Metallschicht aus Cu, Ag, Cr oder Sn oder eine halbtransparente Kohlenstoffschicht ist, wobei Zinndioxid vor der Titandioxid- und/oder TiO₂(Mo)-Fällung abgeschieden sein kann; oder das Pigment ein plättchenartiges Substrat und (a) eine Schichtstruktur: Tio₂(Mo)/TiO₂ oder TiO₂/TiO₂(Mo)/TiO₂ oder TiO₂(Mo)/Schicht aus einem Metalloxid mit niedrigem Brechungsindex, insbesondere SiO₂, Al₂O₃, AlOOH, B₂O₃ oder einer Mischung davon, wobei als zusätzliche Komponenente Alkali- oder Erdalkalimetalloxide enthalten sein können/Schicht aus einem Metalloxid mit hohem Brechungsindex, insbesondere TiO₂, ZrO₂, Fe₂O₃, Fe₃O₄, Cr₂O₃, ZnO oder einer Mischung dieser Oxide, oder TiO₂(Mo)/Schicht aus einem Metalloxid mit niedrigem Brechungsindex, insbesondere SiO₂, Al₂O₃, AlOOH, B₂O₃ oder einer Mischung davon, wobei als zusätzliche Komponenente Alkali- oder Erdalkalimetalloxide enthalten sein können/TiO₂(Mo) umfaßt.

7. Pigment nach Anspruch 3, wobei die TiO₂-Schicht einheitlich mit dem Metall dotiert ist oder der Gehalt des Dotiermetalls in der Nähe des Substrats am höchsten ist und über die TiO₂-Schicht hinweg abnimmt und/oder das Metall in die äußersten 20 nm der TiO₂-Schicht eingearbeitet ist.

8. Pigment nach Anspruch 1, wobei das Pigment die folgende Schichtstruktur aufweist: plättchenartiges (transparentes) Substrat/[SnO₂/TiO₂(Mo)]ₙ mit n = 1, 2, 3, 4 oder 5, insbesondere 2, 3, 4 oder 5; oder
plättchenartiges (transparentes) Substrat/[SnO₂(Mo)/TiO₂]ₙ mit n = 1, 2, 3, 4 oder 5, insbesondere 2, 3, 4 oder 5.

9. Pigment nach Anspruch 8, wobei das (transparente) Substrat unter natürlichem Glimmer, synthetischem Glimmer, SiO₂-Flakes, Al₂O₃-Flakes, Flakes aus natürlichem Glas und Flakes aus synthetischem Glas ausgewählt ist.

10. Verfahren zur Herstellung des (Interferenz-)-Pigments nach Anspruch 1 durch Beschichten von plättchenartigen Substraten mit mindestens zwei Metalloxiden in einem Naßverfahren durch Hydrolyse der entsprechenden wasserlöslichen Metallverbindungen und Abtrennen, Trocknen und gegebenenfalls Calcinieren des so erhaltenen Pigments, wobei das erste Metalloxid bzw. die ersten Metalloxide unter SnO₂ oder Fe₂O₃, TiO₂, ZrO₂ und/oder HfO₂ ausgewählt ist bzw. sind und das zweite Metalloxid unter Mo und W ausgewählt ist.

11. Verwendung der Pigmente nach einem der Ansprüche 1 bis 9 in Anstrichmitteln, beim Tintenstrahldruck, zum Färben von Textilien, zum Pigmentieren von Beschichtungen, Druckfarben, Kunststoffen, Kosmetika, Glasuren für Keramik und Glas.

12. Anstrichmittel, Druckfarben, Kunststoffe, Kosmetika, Keramiken und Gläser, die mit einem Pigment nach einem der Ansprüche 1 bis 9 pigmentiert sind.

13. Verfahren zum Pigmentieren von hochmolekularem organischem Material durch Einarbeiten einer pigmentierungswirksamen Menge eines Pigments nach Anspruch 1 in das hochmolekulare organische Material.

## Revendications

1. Pigment comprenant un substrat lamellaire, et une couche de SnO₂ et/ou une couche d'un oxyde métallique qui est choisi parmi Fe₂O₃, TiO₂, ZrO₂ et/ou HfO_{2,} ladite couche étant dopée avec Mo et/ou W, dans lequel la couche de SnO₂ comprend 0,1 à 60 % en moles de Mo et/ou W, rapporté aux moles de métal dans la couche de SnO₂, et la couche d'oxyde métallique en Fe₂O₃, TiO₂, ZrO₂ et/ou HfO₂ comprend 0,1 à 10% en moles de Mo et/ou W, rapporté aux moles de métal dans l'oxyde métallique.

2. Pigment selon la revendication 1, dans lequel oxyde métallique est TiO₂, Fe₂O₃, ou un mélange de Fe₂O₃ et TiO₂.

3. Pigment selon la revendication 2, dans lequel l'oxyde métallique est TiO₂ et la couche d'oxyde métallique comprend 0,1 à 5 % en moles de Mo et/ou W, rapporté aux moles de Ti dans TiO₂.

4. Pigment selon la revendication 3, dans lequel l'agent dopant est Mo.

5. Pigment selon la revendication 2, dans lequel la couche d'oxyde métallique comprend en outre du carbone, B₂O₃, Al₂O₃ et/ou MgO.

6. Pigment selon la revendication 1, le pigment ayant la structure de couches suivante:
Al/SiO₂/TiO₂(Mo);
Al/SiO₂/Fe₂O₃(Mo);
TRASUB/TiO₂(Mo)/SnO₂/Tio₂(Mo);
TRASUB/TiO₂(Mo)/SnO₂/TiO₂(MO)/SnO_{2/}TiO₂(Mo);
TRASUB/TiO₂(Mo)/SnO_{2/}TiO₂(Mo)/SnO₂/TiO₂(Mo)/SnO₂/TiO₂(Mo);
TRASUB/SnO_{2/}TiO₂(Mo);
TRASUB/SnO_{2/}TiO₂(Mo)/SnO₂/TiO₂(Mo);
TRASUB/SnO_{2/}TiO₂(Mo)/SnO_{2/}TiO₂(Mo)/SnO_{2/}TiO₂(Mo);
TPASUB/SnO₂/TiO₂(Mo)/SnO₂/TiO₂(Mo)/snO₂/TiO₂(Mo)/SnO₂/TiO₂(Mo);
TRASUB/SnO₂/TiO₂(Mo)/SnO₂/TiO₂(Mo)/SnO₂/TiO₂(Mo)/SnO₂/TiO₂ (Mo)/SnO₂/TiO₂(Mo);
TRASUB/SnO₂(Mo)/TiO₂;
TRASUB/SnO₂(Mo)/TiO2/SnO₂(Mo)/TiO₂;
TRASUB/SnO₂/TiO₂/SnO₂(Mo)/TiO₂;
TRASUB/SnO₂/TiO₂/SnO₂(Mo)/TiO₂/TiO₂(Mo);
TRASUB/SnO₂(Mo)/TiO₂/SnO₂(Mo)/TiO₂/SnO₂(Mo)/TiO₂;
TRASUB/SnO₂(Mo)/TiO₂/SnO₂(Mo)/TiO₂/SnO₂(Mo)/TiO₂/SnO₂(Mo)/TiO₂;
TRASUB/SnO₂(Mo)/TiO_{2/}SnO₂(Mo)/TiO₂/SnO₂(Mo)/Tio₂/SnO₂(Mo)/ TiO₂/SnO₂(Mo)/TiO_{2;}
TRASUB/SnO₂(Mo)/TiO₂(Mo);
TRASUB/Fe₂O₃(Mo);
TRASUB/TiO₂&Fe₂O₃(Mo);
TRASUB/SnO₂/TiO₂&Fe₂O₃(Mo);
TRASUB/SnO₂/TiO₂&Fe₂O₃(Mo)/SnO₂/TiO₂&Fe₂O₃(Mo);
TRASUB/SnO₂/TiO₂&Fe₂O₃(Mo)/SnO₂/TiO₂&Fe₂O₃(Mo)/SnO₂/ TiO₂&Fe₂O₃(Mo);
TRASUB/SnO₂/TiO₂&Fe_{z}2₃(Mo)/SnO₂/TiO₂&Fe2₃O₃(Mo)/SnO₂/ TiO₂&Fe₂O₃(Mo)/SnO₂/TiO₂&Fe₂O₃(Mo);
TRASUB/SnO₂/TiO₂&Fe₂O₃(Mo)/SnO₂/TiO₂&Fe₂O₃(Mo)/SnO₂/ TiO₂&Fe₂O₃(Mo)/SnO₂/TiO₂&Fe₂O₃(Mo)/SnO₂/TiO₂&Fe₂O₃(Mo),
TRASUB étant un substrat transparent ou semi-transparent ayant un faible indice de réfraction, en particulier du mica naturel ou synthétique, un autre silicate stratifié, du verre naturel ou synthétique, Al₂O₃, SiO₂, en particulier SiO₂, SiO₂/SiOₓ/SiO₂ (0,03 ≤ x ≤ 0, 95), SiO_{1,40-2,0}/SiO_{0,70-0,99}/SiO_{1,40-2,0}, ou Si/SiO_{z} avec 0,70 ≤ z ≤ 2,0, en particulier 1,40 ≤ z ≤ 2,0; ou bien le pigment ayant la structure de couches suivante:
| | | | |
|---|---|---|---|
| TRASUB | TiO₂(Mo) | | |
| TRASUB | Fe₂O₃(Mo) | | |
| TRASUB | TiO₂(Mo) | SiO₂ | TiO₂ |
| TRASUB | TiO₂ | SiO₂ | TiO₂(Mo) |
| TRASUB | TiO₂(Mo) | SiO₂ | Tio₂(Mo) |
| TRASUB | TiO₂(Mo) | SiO₂ | TiO_{2/}Fe₂O₃ |
| TRASUB | (Sn,Sb)O₂ | SiO₂ | TiO₂(Mo) |
| TRASUB | TiO₂/Fe₂O₃ | SiO₂ | TiO₂(Mo) |
| TRASUB | Cr₂O₃ | SiO₂ | TiO₂(Mo) |
| TRASUB | Fe₂O₃ | SiO₂ | TiO₂(Mo) |
| TRASUB | TiO₂(Mo) | SiO₂ | Fe₂O₃ |
| TRASUB | sous-oxydes TiO | SiO₂ | TiO₂(Mo) |
| TRASUB | TiO₂(Mo) | SiO₂ | sous-oxydes TiO |
| TRASUB | TiO₂(Mo) | SiO₂ | TiO₂&SiO₂&TiO₂ |
| TRASUB | TiO₂&SiO₂&TiO₂ | SiO₂ | TiO₂(Mo) |
| TRASUB | TiO₂(Mo) | Al₂O₃ | TiO₂ |
| TRASUB | TiO₂ | Al₂O₃ | TiO₂(Mo) |
| TRASUB | Fe₂TiO₅ | SiO₂ | TiO₂(Mo) |
| TRASUB | TiO₂(Mo) | SiO₂ | Fe₂TiO₅/TiO₂ |
| TRASUB | STL | TiO₂(Mo) | |
| TRASUB | STL | TiO₂(Mo) | TiO₂ |
| TRASUB | STL | SiO₂ | TiO₂(Mo) |
TRASUB étant un substrat transparent ou semi-transparent ayant un faible indice de réfraction, en particulier du mica naturel ou synthétique, un autre silicate stratifié, du verre naturel ou synthétique, Al_{z}O₃, SiO₂, en particulier SiO₂, SiO₂/SiOₓ/SiO₂ (0,03 ≤ x ≤ 0,95), SiO_{1,40-2,0}/SiO_{0,70-0,99}/SiO_{1,40-2,0}, ou Si/SiO_{z} avec 0,70 ≤ z ≤ 2,0, en particulier 1,40 ≤ z ≤ 2,0, et STL étant une couche semi-transparente telle que, par exemple, une couche métallique semi-transparente de Cu, Ag, Cr ou Sn, ou une couche de carbone semi-transparente, du dioxyde d'étain pouvant être déposé avant la précipitation du dioxyde de titane et/ou de TiO₂(Mo); ou bien le pigment comprenant un substrat lamellaire et (a) une structure de couches Tio₂(Mo)/TiO₂, ou TiO₂/TiO₂(Mo) /TiO₂, ou TiO₂(Mo) /une couche d'un oxyde métallique de faible indice de réfraction, en particulier SiO₂, Al₂O₃, AlOOH, B₂O₃ ou un mélange de ceux-ci, des oxydes de métaux alcalins ou alcalino-terreux pouvant être contenus comme composant supplémentaire/une couche d'un oxyde métallique d'indice de réfraction élevé, en particulier TiO₂, ZrO₂, Fe₂O₃, Fe₃O₄, Cr₂O₃, ZnO ou un mélange de ces oxydes, ou TiO₂(Mo)/une couche d'un oxyde métallique de faible indice de réfraction, en particulier SiO₂, Al₂O₃, AlOOH, B₂O₃ ou un mélange de ceux-ci, des oxydes de métaux alcalins ou alcalino-terreux pouvant être contenus comme composant supplémentaire/TiO₂(Mo).

7. Pigment selon la revendication 3, dans lequel la couche de TiO₂ est dopée uniformément par le métal ou bien la teneur en métal dopant est la plus élevée près du substrat et diminue à travers la couche de TiO₂, et/ou le métal est incorporé dans les 20 nm extérieurs de la couche de TiO₂.

8. Pigment selon la revendication 1, le pigment ayant la structure de couches suivante: substrat lamellaire (transparent)/[SnO₂/TiO₂(Mo)]ₙ avec n = 1, 2, 3, 4 ou 5, en particulier 2, 3, 4 ou 5 ; ou substrat lamellaire (transparent)/[SnO₂(Mo)/TiO₂]ₙ avec n = 1, 2, 3, 4 ou 5, en particulier 2, 3, 4 ou 5.

9. Pigment selon la revendication 8, dans lequel le substrat (transparent) est choisi parmi le mica naturel, le mica synthétique, des paillettes de SiO₂, des paillettes d'Al₂O₃, des paillettes de verre naturel et des paillettes de verre synthétique.

10. Procédé pour fabriquer le pigment (d'interférence) selon la revendication 1, en recouvrant des substrats lamellaires avec au moins deux oxydes métalliques dans un procédé par voie humide par hydrolyse des composés métalliques hydrosolubles correspondants, en séparant, en séchant et éventuellement en calcinant le pigment ainsi obtenu, le(s) premier(s) oxyde(s) métallique(s) étant choisi(s) parmi SnO₂ ou Fe₂o₃, TiO₂, ZrO₂ et/ou HfO₂, et le deuxième oxyde métallique étant choisi parmi Mo et W.

11. Utilisation des pigments selon l'une quelconque des revendications 1 à 9 dans des peintures, l'impression à jet d'encre, pour colorer des textiles, pour pigmenter des revêtements, des encres d'impression, des plastiques, des cosmétiques, des glaçures pour céramiques et du verre.

12. Peintures, encres d'impression, plastiques, cosmétiques, céramiques et verre, qui sont pigmentés avec un pigment selon l'une quelconque des revendications 1 à 9.

13. Procédé pour pigmenter un matériau organique de haut poids moléculaire en incorporant une quantité de pigmentation efficace d'un pigment selon la revendication 1 dans ledit matériau organique de haut poids moléculaire.
